# FASCICULE DE BREVET EUROPEEN

(11) **EP 1 549 694 B1**
(45) Date de publication et mention de la délivrance du brevet: **14.01.2009**
(21) Numéro de dépôt: 03807891.1
(22) Date de dépôt: 10.10.2003
(51) Int. Cl.: C08G 61/04

(54) **POLYMERES COMPRENANT DANS LEUR SQUELETTE UNE INSATURATION ETHYLENIQUE INTERNE ET LEURS PROCEDES DE PREPARATION.**
POLYMERE MIT ETHYLENISCHER UNGESÄTTIGKEIT IN DER HAUPTKETTE UND VERFAHREN ZU IHRER HERSTELLUNG
POLYMERS COMPRISING IN THEIR SKELETON AN INTERNAL ETHYLENIC UNSATURATION AND METHODS FOR PREPARING SAME

(30) Priorité: 11.10.2002 FR 0212672
(43) Date de publication de la demande: 06.07.2005
(73) Titulaire: COMMISSARIAT A L'ENERGIE ATOMIQUE, 75015 Paris (FR); CENTRE NATIONAL DE LA RECHERCHE SCIENTIFIQUE, 75794 Paris Cedex 16 (FR)
(72) Inventeur: LE GALL, Thierry, F-92320 CHATILLON (FR); GODDARD, Jean-Philippe, 92100 Boulogne (FR); MIOSKOWSKI, Charles, F-67200 STRASBOURG (FR)
(74) Mandataire: Poulin, Gérard
(86) Numéro de dépôt international: PCT/FR2003/002995
(87) Numéro de publication internationale: WO 2004/033524

(56) Documents cités:
- EP-A- 0 694 575
- GB-A- 1 043 485
- US-A- 4 567 244
- US-A- 5 731 383

## Description

### DOMAINE TECHNIQUE

La présente invention a pour objet de nouveaux polymères, comportant dans leur squelette une insaturation éthylénique interne ainsi qu'un procédé de fabrication de tels polymères.

### ETAT DE LA TECHNIQUE ANTERIEURE

Les polymères présentant une insaturation éthylénique interne, généralement synthétisés à partir de monomères, qui ont deux doubles liaisons conjuguées dans leur squelette, sont très souvent désignés par le terme général de polymères diènes.

Parmi les polymères diènes les plus répandus, on peut citer le caoutchouc, encore appelé polyisoprène, ce polymère étant constitué d'un motif répétitif cis de formule suivante : 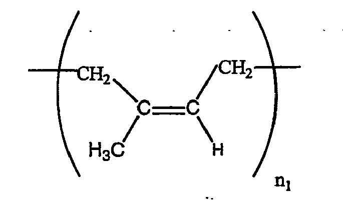 n₁ correspondant au nombre de motifs répétitifs présents dans ledit polymère.

Il est récolté à partir de la sève de l'Hévéa ou peut être obtenu synthétiquement à partir d'isoprène par une polymérisation dite de Ziegler-Natta.

Un polymère diène de structure proche du caoutchouc est le polybutadiène, obtenu à partir de butadiène également par polymérisation de Ziegler Natta.

Le butadiène entre également dans la constitution du copolymère poly(styrène-butadiènestyrène), plus connu sous l'abréviation SBS ou l'appellation commune caoutchouc dur. Ce copolymère est un copolymère bloc comprenant successivement une longue chaîne de polystyrène, une longue chaîne de polybutadiène et à nouveau une longue chaîne de polystyrène. Ce copolymère entre notamment dans la constitution des semelles de chaussures, des pneus.

Sans être exhaustif, on peut citer encore en tant que polymère diène, le polychloroprène, plus connu sous la dénomination de Néoprène. Ce polymère est obtenu synthétiquement par polymérisation de chloroprène, de formule CH₂=CCl-CH=CH₂.

### EXPOSÉ DE L'INVENTION

Le but de la présente invention est de proposer de nouveaux polymères comportant dans leur squelette une insaturation éthylénique interne ainsi que des procédés de préparation de ces polymères simples mettre en oeuvre.

Les nouveaux polymères selon l'invention sont tels que définis dans les revendications 1 à 11 jointes en annexe, tandis que les procédés de préparation selon l'invention sont tels que définis dans les revendications 12 à 23. Les nouveaux polymères de l'invention font partis d'une famille de polymères, dont le squelette comprend un enchaînement de motifs, lesdits motifs étant identiques ou différents et répondant à la formule (I) suivante :

-(CR₁=CR₂-CR₃R₄)- (I)

dans laquelle :
- R₁ représente un atome d'hydrogène ou un groupe hydrocarboné choisi parmi les groupes alkyles linéaires ou ramifiés ayant de 1 à 20 atomes de carbone, les groupés cycloalkyle ayant de 3 à 8 atomes de carbone, les groupes alcoxy ayant de 1 à 20 atomes de carbone, les groupes aryle ayant de 6 à 20 atomes de carbone, les groupe aryloxy ayant de 6 à 20 atomes de carbone ;
- R₂ représente un atome d'halogène ou un groupe hydrocarboné choisi parmi les groupes alkyles linéaires ou ramifiés ayant de 1 à 20 atomes de carbone, les groupes cycloalkyles ayant de 3 à 8 atomes de carbone, les groupes alcoxy ayant de 1 à 20 atomes de carbone, les groupes aryle ayant de 6 à 20 atomes de carbone, les groupe aryloxy ayant de 6 à 20 atomes de carbone ;
- les R₃ et R₄, identiques ou différents, répondent à la même définition que R₁, à condition que l'un au moins des R₃, R₄ représente, au sein de chaque motif, un atome d'hydrogène ;
lesdits R₁, R₂, R₃ et R₄ pouvant comporter, lorsqu'ils représentent un groupe hydrocarboné, un ou plusieurs substituants choisis parmi les groupes halogène, les groupes alkyles de 1 à 20 atomes de carbone, les groupes alcoxy de 1 à 20 atomes de carbone, les groupes aryles de 6 à 20 atomes de carbone, les groupes aryloxy de 6 à 20 atomes de carbone, les groupes amino.

On précise que par groupe amino, on entend, selon l'invention, un groupe amine primaire, secondaire (ou monosubstitué) ou tertiaire (ou disubstitué). Les éventuels substituants peuvent être des groupes alkyle.

Ces polymères comportent dans chaque motif de formule (I) une insaturation éthylénique interne, cette insaturation éthylénique interne se situant, entre deux motifs consécutifs de formule (I), tous les trois atomes de carbone.

Ainsi, grâce à cette disposition, ces polymères peuvent présenter une rigidité plus importante que celle de leurs analogues diènes (c'est-à-dire ceux présentant un enchaînement de motifs avec une insaturation éthylénique tous les 4 atomes de carbone entre deux motifs adjacents).

Ces polymères peuvent correspondre à tout type de polymère, comprenant un enchaînement de motifs de formule (I). On précise, que par enchaînement, on entend la jonction d'au moins deux motifs consécutifs de formule (I), de préférence au moins 4, plus préférentiellement encore au moins 10.

Plus précisément, ces polymères peuvent correspondre à des polymères, dont le squelette est constitué uniquement (à l'exception des motifs terminaux) de motifs de formule (I), ces motifs pouvant être identiques ou différents. On note que les motifs de formule (I) peuvent être différents, ce qui est le cas lorsque les R₁, R₂, R₃ et R₄ sont différents d'un motif à l'autre. Ces polymères peuvent correspondre également à des polymères, dont le squelette est constitué en partie de motifs de formule (I) et d'autres motifs, par exemple, des motifs dérivés des motifs de formule (I), tels que des motifs diols.

Selon l'invention, l'enchaînement de motifs de formule (I) peut comprendre au moins un groupe choisi parmi le groupe constitué de C=O, C=NOH ou CHOH, des groupes alkylènes diyles linéaires ou ramifiés comportant de 4 à 20 atomes de carbone et des mélanges de ceux-ci. En d'autres termes, dans l'enchaînement de motifs (I), les groupes tels que définis ci-dessus pourront s'intercaler entre deux motifs (I) de l'enchaînement.

De préférence, les polymères de l'invention ont une masse molaire de 500 g/mole à 2 000 000 g/mole.

Des polymères particuliers entrant dans la famille de polymères définie ci-dessus répondent à la formule (II) suivante :

R₅- (CR₁=CR₂-CR₃R₄)ₚ-R₆ (II)

dans laquelle les R₁, R₂, R₃ et R₄ sont tels que définis précédemment, R₅ représente un groupe alkyle linéaire ou ramifié comportant de 1 à 20 atomes de carbone, un groupe cycloalkyle comportant de 3 à 20 atomes de carbone ou un groupe aryle comportant de 6 à 20 atomes de carbone, R₆ représente un groupe -OH, amine primaire, thiol -SH, halogène, -CHO, un groupe dérivé de -CHO, un groupe ester, un groupe amide éventuellement substitué, un groupe azide -N₃, p est un entier allant de 4 à 10 000.

Par amide éventuellement substitué, on entend, selon l'invention, dans ce qui précède et ce qui suit, un amide primaire (ou non substitué), un amide secondaire (ou monosubstitué) ou un amide tertiaire (ou disubstitué). Les éventuels substituants peuvent être des groupes alkyles.

Par groupe dérivé de -CHO, on entend, dans ce qui précède et ce qui suit, un groupe résultant d'un addition nucléophile d'un réactif nucléophile sur -CHO, tel qu'un groupe imine, oxime, hydrazine.

Dans la formule (II), R₁, R₃ et R₄ sont tels que définis pour le motif de formule (I) et peuvent être identiques. A titre d'exemple de R₁, R₃ et R₄ susceptibles d'être utilisés, on peut citer par exemple l'hydrogène.

Dans la formule (II), R₂ peut être un groupe alkyle linéaire comprenant de 1 à 20 atomes de carbone, tel que le groupe méthyle et R₅ peut être un groupe alkyle linéaire comportant de 1 à 4 atomes de carbone, tel qu'un groupe butyle.

Dans le cas où R₁, R₃ et R₄ représentent H, R₂ représente -CH₃, et R₅ représente un groupe butyle CH₃-(CH₂)₃- (identifié par Bu dans la formule ci-dessous) et R₆ représente -OH, le polymère répond à la formule (III) suivante :

Bu-(CH=CCH₃-CH₂)ₚ-OH (III)

avec p répondant à la même définition que celle donnée précédemment.

Un autre polymère particulier conforme à la présente invention peut répondre à la formule suivante : 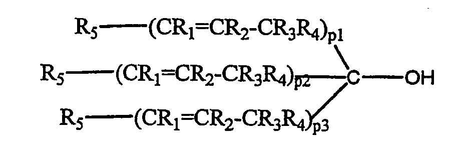 les R₅, identiques ou différents, répondant à la même définition que celle donnée ci-dessus et les p₁, p₂ et p₃, identiques ou différents, étant des entiers allant de 2 à 5000.

D'autres polymères particuliers conformes à la présente invention répondent à la formule (IV) suivante :

R₇-(CR₁=CR₂-CR₃R₄)ₘ-A- (CR₃R₄-CR₂=CR₁)ₙ-R₈ (IV)

dans laquelle les R₁, R₂, R₃ et R₄ sont tels que définis précédemment, A représente un groupe C=O, un groupe dérivé de CO, -CHOH, les R₇ et R₈, identiques ou différents, représentent un groupe alkyle linéaire ou ramifié comportant de 1 à 20 atomes de carbone, un groupe cycloalkyle comportant de 3 à 20 atomes de carbone, un groupe aryle comportant de 6 à 20 atomes de carbone, m est un entier allant de 2 à 5000, n est un entier allant de 2 à 5000.

Par groupe dérivé de C=O, on entend, dans ce qui précède ou ce qui suit, un groupe résultant d'un addition nucléophile d'un réactif nucléophile sur -C=O, tel qu'un groupe imine, oxime, hydrazine.

Les polymères de formule (IV) sont donc des polymères linéaires dont l'enchaînement de motifs (I) comprend un groupe A tel que défini ci-dessus.

Dans la formule (IV), le groupe A peut représenter -(C=O)-, auquel cas le polymère correspondant répond à la formule (V) suivante :

R₇-(CR₁=CR₂-CR₃R₄)ₘ- (C=O) - (CR₃R₄-CR₂=CR₁)ₙ-R₈ (V)

Dans le cas où R₁, R₃ et R₄ représentent H, R₂ représente un groupe méthyle et R₇ et R₈ correspondent à un groupement butyle linéaire (dénommé Bu dans la formule ci-dessus), le polymère répond à la formule suivante (VI) suivante :

Bu- (CH=CCH₃-CH₂)ₘ- (C=O) - (CH₂-CCH₃=CH)ₙ-Bu (VI)

avec m et n répondant à la même définition que celle donnée précédemment.

Enfin, parmi les polymères conformes à la présente invention, on peut citer, à titre d'exemples, les polymères répondant à la formule (VII) suivante : 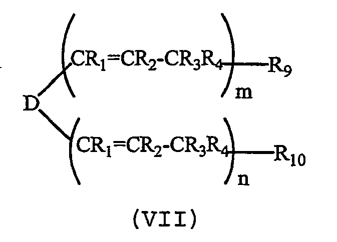 dans laquelle :
- les R₁, R₂, R₃ et R₄ répondent à la même définition que celle donnée précédemment ;
- les R₉ et R₁₀, identiques ou différents représentent un groupe OH, NH₂, SH, amide éventuellement substitué, -CHO, un groupe dérivé de -CHO, un groupe ester, un groupe amide éventuellement substitué, un groupe azide -N₃; ou R₉ et R₁₀ forment ensemble un groupe -C(=O)-, un groupe dérivé de CO, un groupe - CHOH- ;
- D représente un groupe alkylène diyle linéaire ou ramifié comportant de 4 à 20 atomes de carbone et pouvant comporter dans sa chaîne un ou plusieurs hétéroatomes choisis parmi l'oxygène, le soufre, l'azote,
- m est un entier allant de 2 à 5000 et n est un entier allant de 2 à 5000.

Les polymères de formule (VII) peuvent correspondre à des polymères linéaires dont l'enchaînement de motifs de formule (I) comprend un groupe D mais peuvent correspondre également à des polymères cycliques dont l'enchaînement de motifs comprend un groupe D et un groupe -C(=O)-, CHOH,-C(NOH)-.

Dans la formule (VII) ci-dessus, le polymère peut correspondre, comme énoncé précédemment, à un polymère cyclique, ce qui est le cas lorsque les groupes R₉ et R₁₀ forment ensemble un groupe - (C=O) - et D un groupe alkylène diyle linéaire ou ramifié allant de 4 à 20 atomes de carbone, ce polymère répondant ainsi à la formule (VIII) suivante :

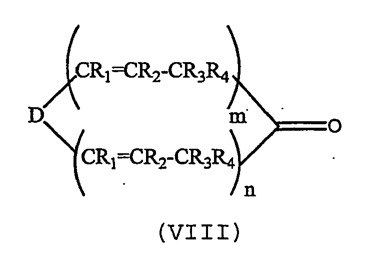

Dans le cas particulier où R₁, R₃ et R₄ représentent H, R₂ représente un groupe méthyle et D un groupe alkylène -(CH₂)₆-, le polymère répond à la formule (IX) suivante : 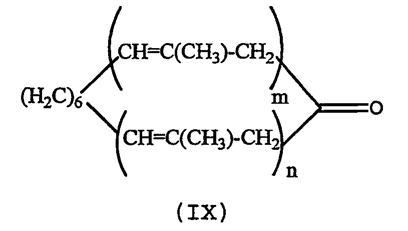 m et n répondant à la même définition que celle donnée précédemment.

Les groupes R₉ et R₁₀ peuvent représenter également tous les deux les mêmes groupes auquel cas le polymère en question est un polymère linéaire avec deux extrémités identiques. Un exemple particulier de ce type de polymère est un polymère où R₉ et R₁₀ représentent, par exemple, tous les deux des groupes - OH et D représente un groupe alkylène linéaire ou ramifié auquel cas le polymère correspondant est un polymère linéaire répondant à la formule (X) suivante :

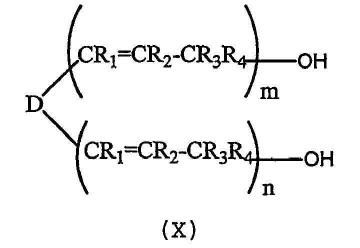

Dans le cas où D correspond à un groupe alkylène linéaire comportant 6 atomes de carbone, le polymère répond à la formule (XI) suivante :

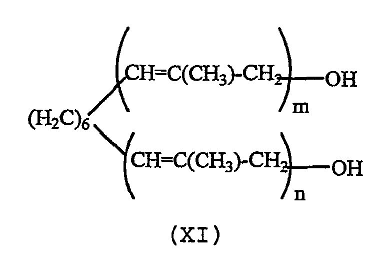

Selon l'invention, l'insaturation éthylénique interne des motifs conformes à la présente invention, peut avoir majoritairement une géométrie E, le polymère résultant présentant ainsi une stéréochimie E des doubles liaisons.

La présente invention a également pour objet des procédés de préparation de polymères comprenant un enchaînement de motifs, ledit enchaînement présentant une insaturation éthylénique tous les 3 atomes de carbone.

De façon générale, l'invention a pour objet un procédé de préparation d'un polymère, dont le squelette comprend un enchaînement de motifs de formule (I') :

-(CR₁=CR'₂-CR₃R₄)- (I')

les R₁, R₃ et R₄ répondant à la même définition que celle donnée précédemment, R'₂ répondant à la même définition que R₂ et pouvant représenter en plus un hydrogène, ledit procédé comprenant une étape consistant à faire réagir, en quantité appropriée :
- au moins, un composé de type ylure répondant à la formule (2) ci-dessous : 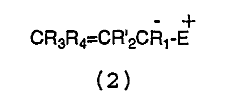 dans laquelle les R₁, R'₂, R₃ et R₄ répondent à la même définition que celle donnée ci-dessus, E étant un groupe partant,
- avec un composé boré trivalent, comportant au moins un groupe apte à migrer, de façon à obtenir ledit enchaînement de motifs de formule (I') tels que définis ci-dessus.

Par composé boré trivalent, on entend un groupe boré porteur de trois groupements. Par groupe apte à migrer, on entend un groupe apte à se déplacer de l'atome de bore à un atome de carbone adjacent par déplacement de liaison, dans les conditions de réaction.

De préférence, le groupe apte à migrer porté par le composé boré peut être choisi parmi les groupes alkyles linéaires ou ramifiés comportant de 1 à 20 atomes de carbone, à l'exception des groupes alkyles ramifiés liés au bore par un carbone tertiaire.

De préférence, le groupe partant E peut être choisi parmi N₂, S(R)₂, S(O)(R)₂, N(R)₃, AsAr₃, PAr₃, où Ar représente un groupe phényle éventuellement substitué par des groupements méthyle ou méthoxy et R est un groupe alkyle, tel qu'un groupe alkyle comprenant de 1 à 20 atomes de carbone.

En particulier, le composé de type ylure peut être l'ylure de méthallyltriphénylarsonium de formule :

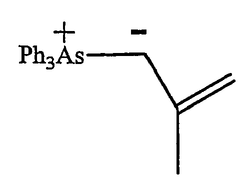

Cet ylure présente notamment l'avantage de pouvoir être facilement préparé.

Ainsi, la formation d'enchaînement de motifs de formule (I') selon l'invention est basée de manière surprenante sur les caractéristiques réactionnelles suivantes :
- grâce à la lacune électronique de l'atome de bore, le composé boré est apte à réceptionner la charge négative portée par l'atome de carbone porteur du groupe R₁, pour former un complexe ;
- le complexe ainsi obtenu est instable, du fait que le composé boré formant complexe avec le composé ylure est porteur d'un excédent de charge négative et se réarrange par migration 1,2 d'un des groupes (ou du groupe, s'il n'y en a qu'un) aptes à migrer du composé boré sur le carbone porteur de R₁, entraînant ainsi le départ concomittant du groupe partant E ;
- le composé borane ainsi formé se réarrange de manière surprenante selon un réarrangement sigmatropique 1,3, alors que l'on aurait pu s'attendre à ce que ce composé réagisse avec un autre composé ylure. Ce réarrangement se caractérise, par le déplacement du groupement boré et de manière concomitante par un déplacement de la double liaison entre l'atome de carbone porteur de R₁ et l'atome de carbone porteur du groupe migrant initialement porté par le composé boré ;
- le composé borane résultant du réarrangement sigmatropique peut former à nouveau un complexe par addition sur une nouvelle molécule d'ylure, suivi d'une nouvelle migration 1,2 et d'un réarrangement 1-3, la réaction pouvant se poursuivre jusqu'à épuisement du stock d'ylure. On obtient ainsi à l'issue de ces étapes des enchaînements de motifs (I'), se caractérisant par la présence d'une insaturation éthylénique tous les 3 atomes de carbone.

Il est entendu, que les proportions d'ylure et de composé boré initial peuvent être aisément déterminées par l'homme du métier, en fonction de la longueur d'enchaînements désirés et de la taille du polymère souhaité.

On note qu'à partir d'un équivalent de composé boré, on peut obtenir autant de motifs souhaités en ajoutant à cet équivalent de composé boré autant d'équivalent d'ylure que de motifs souhaités.

Des mécanismes réactionnels plus précis sont proposés ci-dessous, concernant le procédé de préparation de polymères particuliers conformes à l'invention.

De manière détaillée, la mise en oeuvre du procédé de l'invention commence par la formation du composé ylure dans un solvant polaire aprotique, tel que le THF anhydre. Le composé ylure est préparé en passant par un intermédiaire diazonium, sur lequel on ajoute une base. L'intermédiaire diazonium est préparé par des méthodes usuelles accessibles à l'homme du métier. Puis on introduit le composé boré et on ajoute enfin, de préférence par goutte à goutte, le composé de type ylure.

L'invention concerne, en particulier, un procédé de préparation d'un polymère de formule (II') ci-dessous :

R₅-(CR₁=CR'₂-CR₃R₄)ₚ-R₆ (II')

comprenant une étape de réaction, en quantité appropriée, d'un composé boré de formule (1) R₅-BR₁₁R₁₂ avec R₅ ayant la même définition que celle donnée précédemment et représentant le groupe apte à migrer, R₁₁ et R₁₂, identiques ou différents, pouvant:
- représenter un groupe alkyle ramifié lié au bore par un carbone tertiaire comportant de 4 à 20 atomes de carbone, un groupe alcoxy comportant de 1 à 20 atomes de carbone, un groupe aryloxy comportant de 1 à 20 atomes de carbone ; ou
- former ensemble un groupe -O-X-O-, dans lequel X est un groupe alkylène diyle linéaire ou ramifié comportant de 2 à 6 atomes de carbone
avec au moins un composé nucléophile allylique du type ylure de formule (2) tel que définie précédemment, moyennant quoi on obtient un intermédiaire de formule (XII) ci-dessous :

R₅-(CR₁=CR'₂-CR₃R₄)ₚ-BR₁₁R₁₂ (XII)

ledit procédé comprenant, en outre, une étape de transformation du groupe boré en groupe R₆ approprié, moyennant quoi on obtient le polymère de formule (II') défini ci-dessus.

On note que, pour ce procédé, le composé boré comporte un seul groupe apte à migrer (groupe R₅), les groupes R₁₁ et R₁₂, de part leur nature, étant inaptes à la migration.

A titre d'exemples, de composés borés particuliers, on peut citer les composés de formules suivantes :

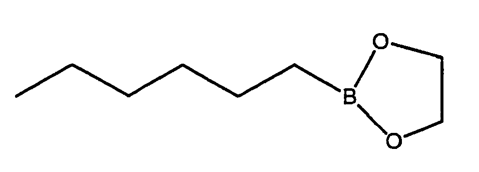

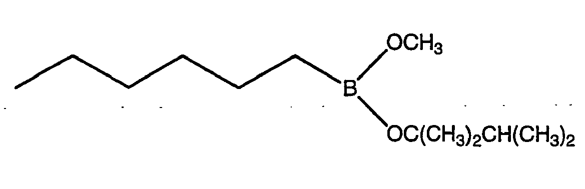

Afin de rendre la description plus claire, ce procédé de réalisation va maintenant être exposé par le biais d'un mécanisme réactionnel, comprenant les étapes suivantes
- dans la première étape, le composé boré R₅-BR₁₁R₁₂ (1) réagit avec le composé nucléophile allylique (2), conduisant à un complexe (3) qui se réarrange spontanément par une migration de type 1,2 du groupe R₅, pour donner un composé intermédiaire (4) :

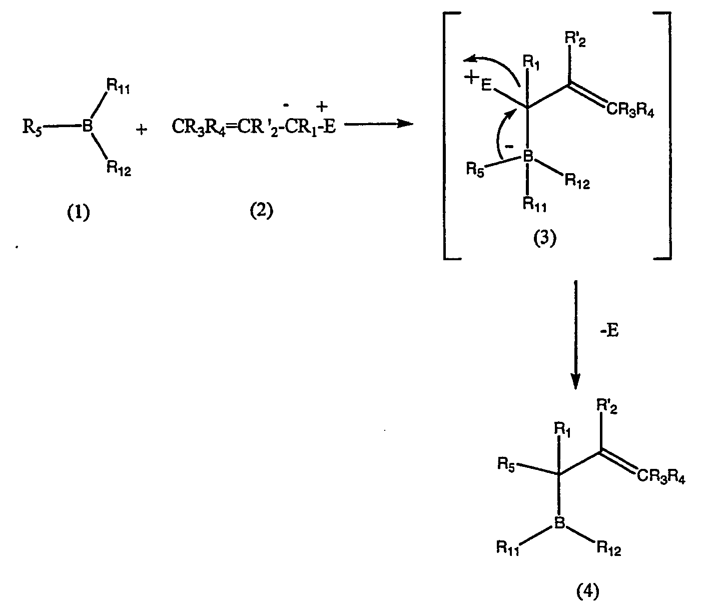

Le composé intermédiaire (4) diffère du composé boré initial (1) par le fait qu'un motif (CR₃R₄=CR₂)-CR₁ s'est inséré dans la liaison bore-carbone B-R₅.
- dans un deuxième temps, le composé intermédiaire (4) se réarrange à nouveau par un mécanisme de réarrangement 1,3-sigmatropique selon le schéma suivant :

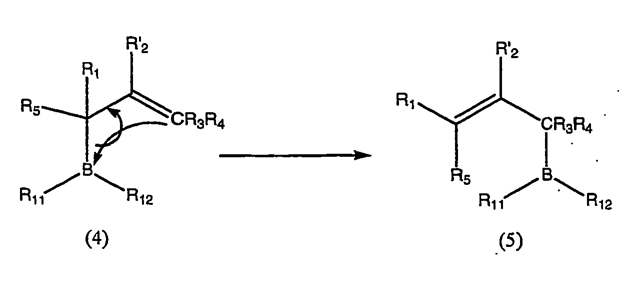

Ce deuxième réarrangement est plus rapide que la réaction de l'intermédiaire (4) avec le composé nucléophile allylique de type ylure (2).

Le composé borane (5) obtenu au cours de cette deuxième étape peut participer à une nouvelle étape de polymérisation pour donner après réaction avec plusieurs équivalents d'ylures le polymère de formule suivante :

R₅-(CR₁=CR'₂-CR₃R₄)ₚ-BR₁₁R₁₂ (XII)

Enfin, la dernière étape consiste à transformer par réaction avec un réactif adéquat le groupe BR₁₁R₁₂ en groupe R₆ approprié.

A titre d'exemples, pour transformer le groupement -BR₁₁R₁₂ en groupe -OH, on peut soumettre le polymère de formule (XII) à une solution oxydante de peroxyde d'hydrogène H₂O₂ en milieu basique (par exemple NaOH, 3M). D'autres oxydants couramment utilisés sont l'acide m-chloroperbenzoïque, l'oxyde de triéthylamine.

Pour transformer le groupe -BR₁₁R₁₂ en groupe -NH₂, on peut soumettre le polymère de formule (XII) à une solution d'acide hydroxylamine-O-sulfonique NH₂-O-SO₃H ou de chloramine NH₂Cl en milieu basique.

Enfin, pour transformer le groupe -BR₁₁R₁₂ en groupe -CHO, sachant que les R₁₁ et R₁₂ représentent des groupes alcoxy, on peut soumettre le polymère de formule (XII) à un organolithien, par exemple, de méthoxyméthyl thiophényl éther, suivie d'un traitement avec du chlorure mercurique (HgCl₂) et d'un traitement à l'eau oxygénée en milieu basique.

Par ce procédé, on obtient ainsi des polymères avec une extrémité R₅ provenant du composé boré de départ et une extrémité R₆ résultant de la transformation chimique du groupe BR₁₁R₁₂.

Selon une variante de l'invention, le procédé de réalisation d'un polymère de formule (II) ci-dessous :

R₅-(CR₁=CR'₂-CR₃R₄)ₚ-R₆ (II')

comprend une étape de réaction, en quantité appropriée, d'un composé boré de formule (R₅)₃-B avec R₅ ayant la même définition que celle donnée précédemment, avec au moins un composé nucléophile allylique du type ylure de formule (2) tel que définie précédemment, moyennant quoi on obtient un intermédiaire de formule (XIII) ci-dessous :

[R₅-(CR₁=CR'₂-CR₃R₄)ₚ]₃-B (XIII)

ledit procédé comprenant, en outre, une étape de transformation du groupe boré en groupe R₆ approprié, moyennant quoi on obtient le polymère de formule (II') défini ci-dessus.

Les réactions de transformation du composé intermédiaire (XIII) en polymère (II) sont semblables à celles décrites pour la transformation du composé intermédiaire (XII).

En particulier, on peut utiliser comme composé boré le composé Bu₃B (Bu correspondant au groupe butyle linéaire), comme composé nucléophile de type ylure l'ylure de méthallyltriphénylarsonium pour lequel E correspond à un groupement Ph₃As, moyennant quoi on obtient à l'issue d'une étape finale de transformation, par traitement à l'eau oxygénée en milieu basique, le polymère de formule (III) défini ci-dessus.

Un procédé de préparation selon l'invention d'un polymère particulier répondant à la formule suivante : 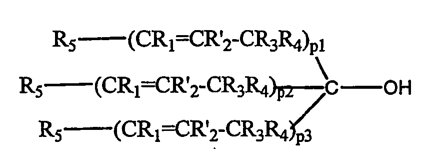 les R₅, identiques ou différents, répondant à la même définition que celle donnée précédemment et les p₁, P₂ et p₃, identiques ou différents, étant des entiers allant de 2 à 5000, comprend une étape de réaction, en quantité appropriée, d'un composé boré de formule :

(R₅)₃-B

avec au moins un composé nucléophile allylique du type ylure de formule (2) telle que définie précédemment, moyennant quoi on obtient un intermédiaire de formule (XIV) ci-dessous : 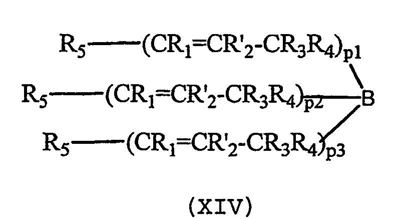 ledit procédé comprenant, en outre, une étape de transformation du groupe boré en groupe C-OH par traitement du composé intermédiaire (XIV) par chauffage en présence de monoxyde de carbone, de préférence, à 150°C en présence d'éthylène glycol, suivi d'un traitement à l'eau oxygénée en milieu basique.

L'invention concerne également un procédé de préparation d'un polymère particulier, conforme à l'invention, ledit polymère répondant à la formule (IV') suivante:

R₇-(CR₁=CR'₂-CR₃R₄)ₘ-A-(CR₃R₄-CR'₂=CR₁)ₙ-R₈ (IV')

avec les R₁, R'₂, R₃, R₄, R₇, R₈, A, m et n ayant la même définition que celle donnée précédemment, ledit procédé comprenant la réaction :
- d'un composé boré de formule (6) R₇-BR₈R₁₃ avec R₇ et R₈ ayant la même définition que celle donnée précédemment, R₁₃ étant un groupe alkyle ramifié lié au bore par un carbone tertiaire comportant de 4 à 20 atomes de carbone, un groupe alcoxy ou aryloxy comportant de 1 à 20 atomes de carbone ;
- avec au moins un composé nucléophile allylique du type ylure de formule (2) : 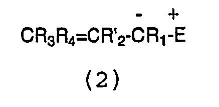 telle que définie précédemment, afin d'obtenir un dérivé de formule (XV) :

   R₇-(CR₁=CR'₂-CR₃R₄)ₘ-BR₁₃-(CR₁=CR'₂-CR₃R₄)ₙ-R₈ (XV)

   suivi d'une réaction de transformation du groupe BR₁₃ en groupe A approprié.

Comme exemples de composés borés, on peut citer les composés particuliers répondant aux formules suivantes : 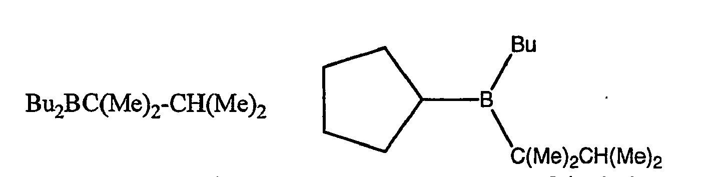 Bu correspondant au groupe butyle linéaire.

Par exemple, pour passer de la fonction BR₁₃ à CO, les traitements suivants peuvent être appliqués :
- traitement avec du monoxyde de carbone, en présence d'eau, à une pression, par exemple, de 100 bars et une température d'au moins 70°C ;
- traitement avec du NaCN en présence de (CF₃CO)₂O, suivi d'un traitement avec dé l'eau oxygénée en milieu basique ;
- si R₁₃ représente un groupe alcoxy, traitement avec du dichlorométhyl méthyléther, en présence de triéthylméthylate de lithium, suivi d'un traitement en présence d'eau oxygénée en milieu basique.

Une fois que l'on a obtenu la fonction CO, il est clair que l'on peut passer aux fonctions dérivées (oxime, imine, alcools) par des traitements classiques à la portée de l'homme de l'art. Par exemple, pour passer de la fonction CO à la fonction C=NOH, on peut envisager un traitement à l'hydroxylamine, tandis que pour obtenir une fonction CHOH, on peut réduire la fonction CO à l'aide d'un réactif tel que le borohydrure de sodium.

Enfin, la présente invention a pour objet un procédé de préparation d'un polymère particulier de formule (VII') suivante : 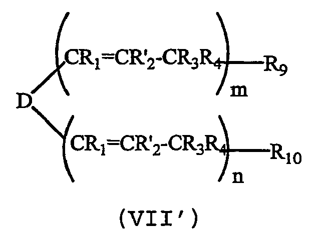 telle que définie précédemment, ledit procédé comprenant une étape de réaction d'un composé boré cyclique de formule (7) : 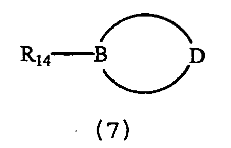 R₁₄ représentant un groupe choisi parmi les groupes alkyles ramifiés liés au bore par un carbone tertiaire comportant de 4 à 20 atomes de carbone, les groupes alcoxy comportant de 1 à 20 atomes de carbone ou aryloxy comportant de 6 à 20 atomes de carbone, D ayant la même définition que celle donnée précédemment
avec au moins un composé nucléophile de type ylure de formule (2) : 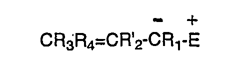 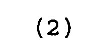 telle que définie précédemment, afin d'obtenir un dérivé de formule (XVI) : 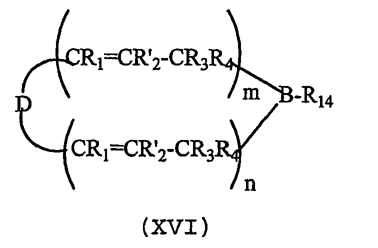 suivi d'une étape de transformation du groupe BR₁₄ en groupes R₉ et R₁₀ appropriés.

Ainsi, ce procédé correspond à la préparation d'un polymère conforme à la présente invention à partir d'un composé boré cyclique. Au cours de ce procédé, on assiste à une expansion du cycle boré, par migration 1,2 des liaisons C-B du cycle, alors que R₁₄ n'est pas apte à subir cette migration.

Afin de rendre la description plus claire, ce procédé va maintenant être exposé par le biais du mécanisme réactionnel suivant :
- dans un premier temps, le composé boré cyclique (7) réagit avec le composé nucléophile allylique (2), conduisant à un complexe (8) qui se réarrange spontanément, par migration 1, 2 d'une liaison carbone-bore du composé cyclique, pour donner le composé (9) selon le schéma suivant : 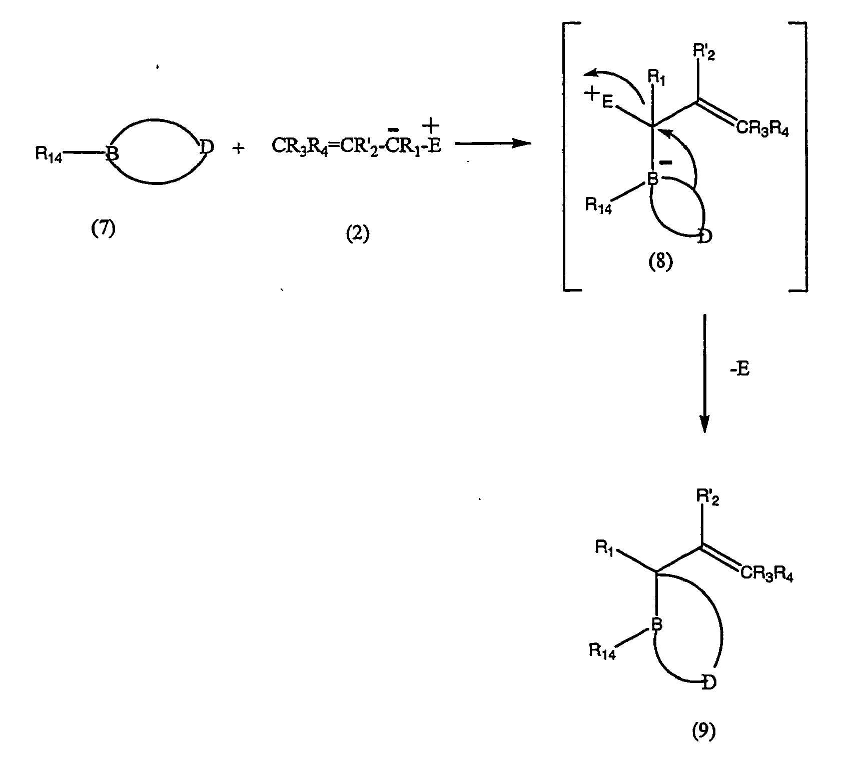
- dans un deuxième temps, le composé (9) se réarrange par un mécanisme de réarrangement 1,3-sigmatropique selon le schéma suivant :

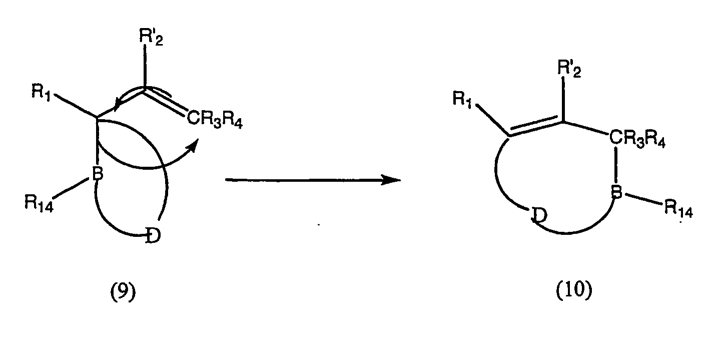

Le composé (10) obtenu au cours de cette deuxième étape peut participer à une nouvelle étape de polymérisation pour donner après réaction avec plusieurs équivalents d'ylures le polymère de formule (XIV) suivante:

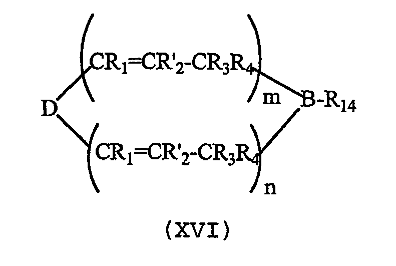

Ensuite, une étape finale consiste à transformer le groupe B-R₁₄ en groupes -R₉ et R₁₀ appropriés.

Les réactions envisageables pour la transformation du groupe R₁₄ sont similaires à celles envisagées pour la transformation du groupe BR₁₁R₁₂ en groupe R₆.

A titre d'exemples, on peut citer comme composé boré cyclique, conforme à la définition du composé (7), le B-thexylborépane de formule : 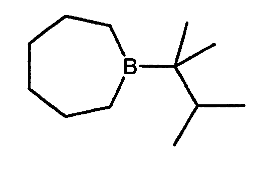 pour lequel le groupe thexyle -C(CH₃)₂-CH(CH₃)₂ n'est pas apte à migrer selon une migration 1,2 (groupe dit non labile), ce qui fait que le motif -(CR₁=CR₂-CR₃R₄)-va s'insérer dans le cycle pour donner un intermédiaire cyclique.

Lorsque le procédé met en jeu comme composé boré le B-thexylborépane et comme composé nucléophile allylique de type ylure l'ylure de méthallyltriphénylarsonium pour lequel E correspond au groupement Ph₃As et que cette réaction est suivie d'une étape de transformation par action d'eau oxygénée en milieu basique, on obtient le polymère de formule (XI) défini ci-dessus. Lorsque l'étape de transformation consiste en une étape de carbonylation, le polymère obtenu est le polymère de formule (IX) défini ci-dessus. Cet étape de conversion en cétone consiste, par exemple, à traiter le polymère boré (XVI) par du cyanure de sodium puis de l'anhydride trifluoroacétique puis par de l'eau oxygénée en milieu basique.

Les polymères selon l'invention sont particulièrement intéressants, dans la mesure où ils peuvent trouver une application dans de nombreux secteurs.

Ainsi, ils peuvent être employés pour la fabrication de fibres, de résines, ou de films, pour la fabrication d'objets nécessitant des matériaux relativement rigides, par exemple pour la fabrication de joints de colmatage, de gaines ou d'enduits pour l'isolation de matériel conducteur.

Les polymères comportant des fonctions polaires peuvent être utilisés, par exemple, pour réaliser des colles ou des adhésifs.

L'invention va maintenant être décrite par rapport aux exemples suivants donnés à titre illustratif et non limitatif.

### EXEMPLE 1.

L'exemple 1 présente un exemple de préparation d'un polymère linéaire rentrant dans le cadre de la définition des polymères de formule (VII) avec R₁, R₃ et R₄ représentent H, R₂ représente -CH₃, R₉ et R₁₀ représentent -OH et D représente -(CH₂)₆-.

Le schéma réactionnel est le suivant :

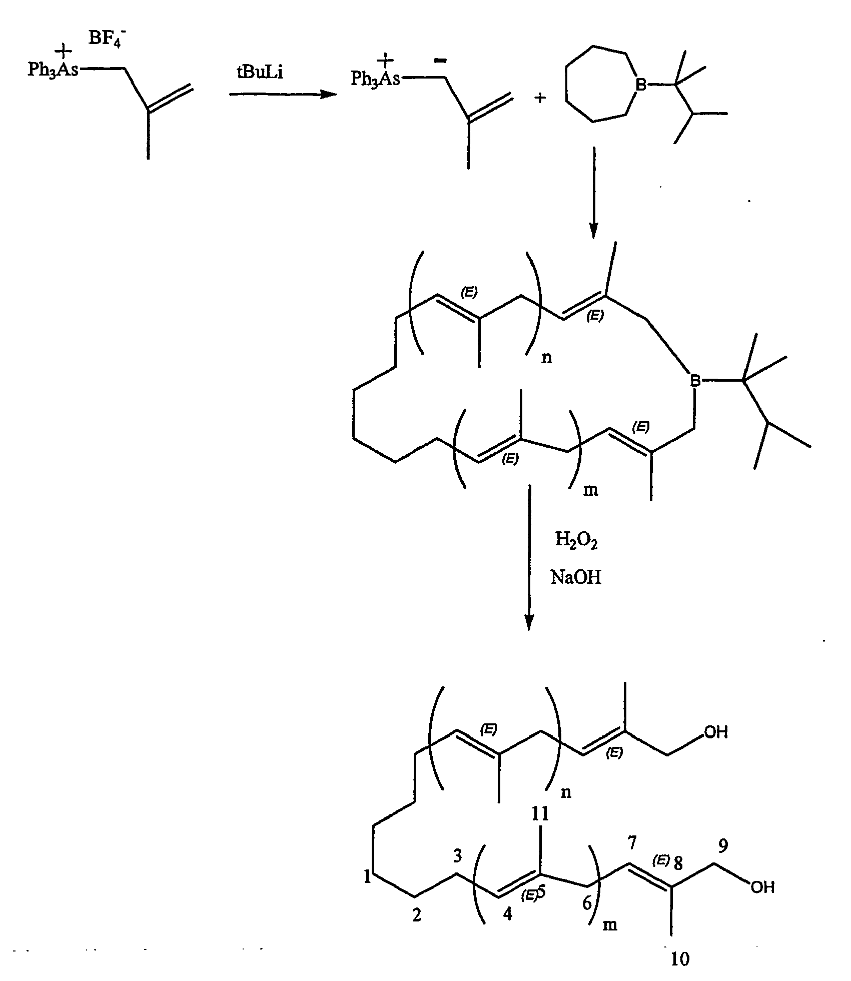

Le protocole de réalisation de ce type de polymère est le suivant :
A une suspension de 0,896 g (2 mmol, 10 éq) de tétrafluoroborate de méthallyltriphénylarsonium dans 15 mL de THF anhydre sous atmosphère d'argon refroidie à -78°C est ajouté goutte à goutte 1,33 mL (2mmol, 10 éq) d'une solution de tert-butyllithium (1,5M dans le pentane). La solution se colore immédiatement en orange et devient limpide. L'agitation est maintenue à cette température pendant 30 minutes puis le mélange est placé dans un bain de glace. On laisse la température se stabiliser (15 minutes) puis une solution de 38,4 mg (0,2 mmol, 1 éq) de borane cyclique dans 1 mL de THF anhydre est ajoutée. La solution se décolore en 1 heure. On ajoute alors 3 mL de peroxyde d'hydrogène à 30 % et 3 mL de soude 3N. Le mélange revient à température ambiante et l'agitation est maintenue pendant 4 heures, puis 30 mL d'une solution saturée de chlorure d'ammonium sont ajoutés et le mélange est extrait par 3 fois 70 mL de dichlorométhane. La phase organique est séchée sur du sulfate de magnésium puis filtrée et évaporée. On obtient un solide blanc. Ce mélange brut est adsorbé sur silice puis déposé sur une colonne de gel de silice et élué avec un mélange hexane/éther/dichlorométhane 2/5/3 pour conduire à une huile incolore. Un solide blanc se forme après l'addition de 50 mL de méthanol. La suspension est filtrée et le solide est lavé par 2 fois 20 mL de méthanol puis séché sous vide. On récupère le polymère sous forme d'un solide blanc (112 mg, Rendement=81%).
**RMN ¹H** (CDCl₃, δ en ppm) : 5,17-5,12 (br t, 283 H, H4), 4,01 (s, 2H, H9), 2,69-2,67 (br d, 604H, H6), 1,66-1,58 (br s, 921H, H10-H11).
**RMN ¹³C** (CDCl₃, δ en ppm) : 136,11-135,34 (br s, C5), 122,40-121,88 (br s, C4), 38,58-32,03 (br s, C6), 16,48-16,22 (br s, C11).

Le polymère obtenu est également analysé par chromatographie d'exclusion stérique.

Les conditions d'analyse sont les suivantes :
Type de colonne : PL gel 100+1000
Eluant : THF
Débit pompe : 1,00 mL/mn

L'échantillon à analyser présente une concentration de 1,45 mg/mL, avec un incrément d'indice de réfraction dn/dc fixé à 0,130 mL/g.

Les résultats des mesures par LALLS (ou diffusion de lumière laser à petit angle) sont les suivants :
Degré de polymérisation Dp=424= n+m
Masse molaire en nombre Mn=23040 g/mol
Masse molaire en poids Mw=33750 g/mol
Indice de polydispersité DPI= Mw/Mn=1,46

Dans les mêmes conditions opératoires que celles mentionnées ci-dessus, 0,896 g (2 mmol, 50 éq) de sel d'arsonium réagissent avec 7,7 mg (0,04 mmol, 1 éq) de borane cyclique pour conduire après oxydation à un polymère de même structure (83 mg, Rendement=74%).

Le polymère obtenu est également analysé par chromatographie d'exclusion stérique.

Les conditions d'analyse sont les suivantes :
Type de colonne : PL gel 100+1000
Eluant : THF
Débit pompe : 1,00 mL/mn

L'échantillon à analyser présente une concentration de 1,66 mg/mL, avec dn/dc fixé à 0,130 mL/g.

Les résultats des mesures par LALLS sont les suivants :
DP=490
Mn=26470 g/mol
Mw=39600 g/mol
DPI= Mw/Mn=1,50.

### EXEMPLE 2.

L'exemple 2 présente le cas d'un polymère cyclique rentrant dans le cadre de la famille de polymères de formule (VII), avec R₉ et R₁₀ formant ensemble un groupe - (C=O) -, D un alkylène - (CH₂) ₆- , R₁, R₃ et R₄ représentent H, R₂ représente -CH₃.

Le schéma réactionnel est le suivant :

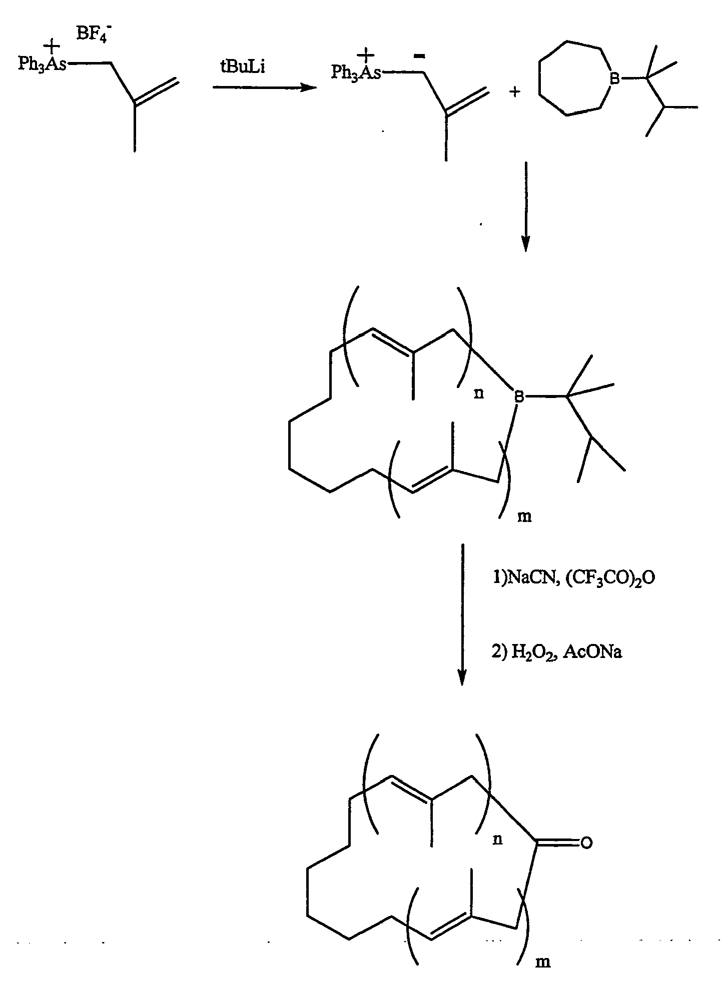

A une suspension de 0,896 g (2 mmol, 10 éq) de tétrafluoroborate de méthallyltriphénylarsonium dans 15 mL de THF anhydre sous atmosphère d'argon refroidie à -78 °C est ajouté goutte à goutte 1,33 ml (2 mmol, 10 èq) de tert-butyllithium (1,5 M dans le pentane). La solution se colore immédiatement en orange et devient limpide. L'agitation est maintenue à cette température pendant 30 minutes puis le mélange est placé dans un bain de glace. La température se stabilise à 0°C (15 minutes) puis une solution de 38,4 mg (0,2 mmol, 1 éq) de borane cyclique dans 1 mL de THF anhydre est ajoutée. La solution se décolore en 1 heure. Le mélange est alors placé à température ambiante puis 20 mg (0,4 mmol, 2 éq) de NaCN sont ajoutés. On agite alors vigoureusement le mélange à température ambiante pendant 2 heures. La solution jaunit légèrement. La température est alors descendue à -78°C et on ajoute 62 µL (0, 44 mmol, 2,2 éq) d'anhydride trifluoroacétique. Un précipité apparaît. La température est maintenue à -78°C pendant 10 minutes puis le mélange est placé à température ambiante. L'agitation est maintenue pendant 5 heures puis 3 mL de peroxyde d'hydrogène à 30 % et 3 mL d'une solution d'acétate de sodium 3N sont ajoutés. On agite pendant 5 heures puis le mélange est extrait par 3 fois 50 mL de dichlorométhane. Les phases organiques sont rassemblées et lavées par 20 mL d'acide chlorhydrique 1N. La solution est séchée sur sulfate de magnésium, filtrée et les solvants sont évaporés. Le produit brut est adsorbé sur de la silice déposé sur une colonne de gel de silice puis élué avec un mélange hexane /éther/dichlorométhane 3/6/1. On récupère alors une huile incolore qui se transforme en un solide blanc après l'addition de 20 mL de méthanol. Le polymère est alors lavé par 2 fois 10 mL de méthanol et est isolé sous la forme d'un solide blanc (56 mg, 43 %).
Masse molaire du motif (2-méthyl)prop-1-ènylidène : 54 g/mol.
Masse molaire du motif cyclohexanone : 112 g/mol
Masse molaire du polymère : (112 + (n+m)54) g/mol

Le polymère obtenu est également analysé par chromatographie d'exclusion stérique.
Les conditions d'analyse sont les suivantes :
Type de colonne : PL gel 100+1000
Eluant : THF
Débit pompe : 1,00 mL/mn

L'échantillon à analyser présente une concentration de 1,82 mg/mL, avec dn/dc fixé à 0,130 mL/g.

Les résultats des mesures par LALLS sont les suivants :
Dp=481
Mn=26050 g/mol
Mw=35730 g/mol
DPI= Mw/Mn=1,37.

### EXEMPLE 3.

L'exemple 3 présente un exemple de préparation d'un polymère linéaire rentrant de le cadre de la définition des polymères de formule (II) avec R₁, R₃ et R₄ représentant H, R₂ représentant -CH₃, R₅ représentant CH₃- (CH₂) ₃- (désigné par Bu) , R₆ représentant -OH.

Le schéma réactionnel est le suivant :

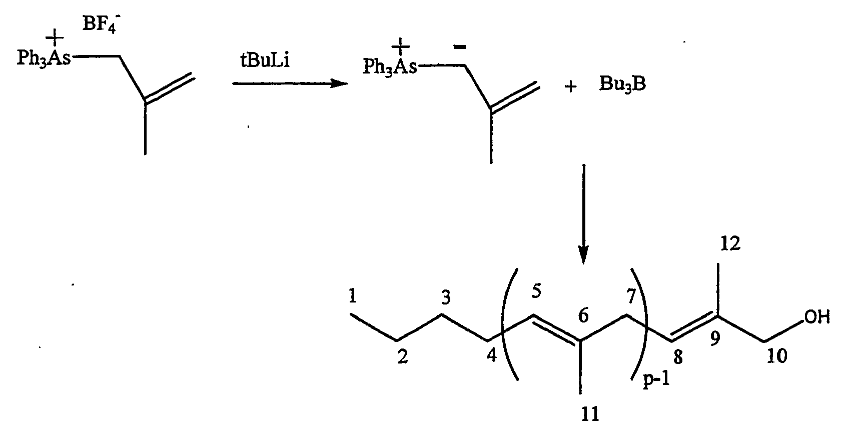

A une suspension de 0,806 g (1,8 mmol, 9 éq) de tétrafluoroborate de méthallyltriphénylarsonium dans 15 mL de THF anhydre, sous atmosphère d'argon, refroidie à -78°C est ajouté goutte à goutte 1,2 mL (1,8 mmol, 9 éq) d'une solution de tert-butyllithium (1,5M dans le pentane). La solution devient orange vif et limpide. L'agitation est maintenue pendant 30 minutes à -78°C puis pendant 15 minutes à 0°C. Une solution contenant 0,2 mL (0,2 mmol, 1 éq) de tributylborane (1M dans le THF) dans 2 mL de THF anhydre est refroidie dans un bain de glace, puis ajoutée goutte à goutte. La décoloration totale se produit 10 minutes après la fin de l'addition. On ajoute alors 3 mL de peroxyde d'hydrogène à 30 % puis 2 mL de soude 3N. Le mélange est agité pendant 4 heures à température ambiante. On ajoute 30 mL d'une solution saturée de chlorure d'ammonium puis le milieu réactionnel est extrait par 3 fois 50 mL de dichlorométhane. La phase organique est séchée sur sulfate de magnésium puis filtrée et évaporée. Le mélange brut est adsorbé sur de la silice et déposé le produit sur une colonne de gel de silice puis élué avec un mélange hexane/éther 8/2. On obtient le polymère sous la forme d'une huile incolore (125 mg, Rendement=89 %).
Masse molaire du motif (2-méthyl)prop-1-ènylidène : 54 g/mol.
Masse molaire du motif hexanol : 74 g/mol
Masse molaire du polymère : (74 + p54) g/mol.
Le degré moyen de polymérisation déterminé par RMN est DP=p+1=12.
**RMN ¹H(CDCl₃, δ en ppm) :** 5,45-5,40 (br t, 1H, H8), 5,17-5,12 (t app, 11,2 H, H5), 4,13 (s, 0,3 H, H10), 4,02 (s, 1,7H, H10'), 2,74-2,64 (m, 25H, H7), 2,00-1,96 (m, 2H, H4) , 1,68-1,66 (m, 3H, H12), 1,60-1,56 (m, 33,9 H, H11) 1,33-1,21 (m, 4,6H, H2-H3), 0,90-0,81 (m, 3H, H1).
**RMN ¹³C (CDCl₃, δ en ppm) :** 135,91-135,26 (m), 135,14, 135,43, 124,69, 124,34, 123,08-122,43 (m), 69,08, 38, 35-37, 66 (m), 31,27, 30,75, 30,46, 29,84, 27,77, 23,60, 16,25, 13,77.

Dans les mêmes conditions opératoires, à partir de 896 mg (2 mmol, 20 éq) du même sel d'arsonium et de 0,1 mL (0,1 mmol, 1 éq) de tributylborane, on obtient après oxydation un polymère de même structure (93 mg, 81 %).
**RMN ¹H (CDCl₃, δ en ppm) :** 5,42 (m, 1H, H8), 5,1-5,12 (t app, 25,3 H, H5), 4,13 (s, 0, 2 H, H10) , 4,01 (s, 1,8H, H10'), 2,74-2,64 (m, 58H, H7), 1,99-1,94 (m, 2H, H4), 1,68-1,66 (m, 5H, H12), 1,60-1,56 (m, 91 H, H11) 1,33-1,21 (m, 4,6H, H2-H3), 0,90-0,81 (m, 3H, H1).

Le degré moyen de polymérisation déterminé par RMN est DP=26.

## Revendications

1. Polymère répondant à la formule (III) suivante :
CH₃-(CH₂)₃-(CH=CCH₃-CH₂)ₚ-OH (III)
p étant un entier allant de 4 à 10 000.

2. Polymère répondant à la formule suivante : 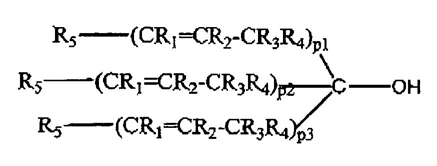 dans laquelle :
- les R₁ représentent un atome d'hydrogène ou un groupe hydrocarboné choisi parmi les groupes alkyles linéaires ou ramifiés ayant de 1 à 20 atomes de carbone, les groupes cycloalkyles ayant de 3 à 8 atomes de carbone, les groupes alcoxy ayant de 1 à 20 atomes de carbone, les groupes aryles ayant de 6 à 20 atomes de carbone, les groupe aryloxy ayant de 6 à 20 atomes de carbone ;
- les R₂ représentent un atome d'halogène ou un groupe hydrocarboné choisi parmi les groupes alkyles linéaires ou ramifiés ayant de 1 à 20 atomes de carbone, les groupes cycloalkyles ayant de 3 à 8 atomes de carbone, les groupes alcoxy ayant de 1 à 20 atomes de carbone, les groupes aryles ayant de 6 à 20 atomes de carbone, les groupe aryloxy ayant de 6 à 20 atomes de carbone ;
- les R₃ et R₄, identiques ou différents, répondent à la même définition que R₁, à condition que l'un au moins des R₃, R₄ représente, dans chaque motif, un atome d'hydrogène ;
lesdits R₁, R₂, R₃ et R₄ pouvant comporter, lorsqu'ils représentent un groupe hydrocarboné, un ou plusieurs substituants choisis parmi les groupes halogène, les groupes alkyle de 1 à 20 atomes de carbone, les groupes alcoxy de 1 à 20 atomes de carbone, les groupes aryle de 6 à 20 atomes de carbone, les groupes aryloxy de 6 à 20 atomes de carbone, les groupes amino ;
- les R₅, identiques ou différents, représentent un groupe alkyle linéaire ou ramifié comportant de 1 à 20 atomes de carbone, un groupe cycloalkyle comportant de 3 à 20 atomes de carbone ou un groupe aryle comportant de 6 à 20 atomes de carbone; et
- les p₁, p₂ et p₃, identiques ou différents, sont des entiers allant de 2 à 5000.

3. Polymère répondant à la formule (IV) suivante :
R₇-(CR₁₌CR₂-CR₃R₄)ₘ-A- (CR₃R₄-CR₂=CR₁)ₙ-R₉ (IV)
dans laquelle les R₁, R₂, R₃ et R₄ sont tels que définis dans la revendication 2, A représente un groupe C=O, un groupe dérivé de CO, ou un groupe CHOH, les R₇ et R₈, identiques ou différents, représentent un groupe alkyle linéaire ou ramifié comportant de 1 à 20 atomes de carbone, un groupe cycloalkyle de 3 à 20 atomes de carbone, un groupe aryle de 6 à 20 atomes de carbone, m est un entier allant de 2 à 5000, n est un entier allant de 2 à 5000.

4. Polymère selon la revendication 3, dans lequel A est un groupe C=O.

5. Polymère selon la revendication 4 répondant à la formule (VI) suivante :
Bu-(CH=C(CH₃)-CH₂)ₘ-(C=O)-(CH₂-C(CH₃)=CH)ₙ-Bu (VI)
Bu représentant le groupe butyle linéaire, m et n étant tels que définis à la revendication 3.

6. Polymère répondant à la formule (VII) : 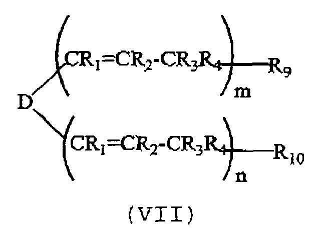 dans laquelle:
- les R₁, R₂, R₃ et R₄ sont définis tel que dans la revendication 2 et m et n sont définis tel que dans la revendication 3 ; et
- les R₉ et R₁₀, identiques ou différents représentent un groupe OH, NH₂, SH, amide éventuellement substitué, -CHO, un groupe dérivé de - CHO, un groupe ester, un groupe amide éventuellement substitué, un groupe azide -N₃; ou
- R₉ et R₁₀ forment ensemble un groupe - C(=O)-, un groupe dérivé de CO, -CHOH- ;
- D représente un groupe alkylène diyle linéaire ou ramifié comportant de 4 à 20 atomes de carbone et pouvant comporter dans sa chaîne un ou plusieurs hétéroatomes choisis parmi l'oxygène, le soufre, l'azote, m est un entier allant de 2 à 5000, n est un entier allant de 2 à 5000.

7. Polymère selon la revendication 6, dans lequel D représente un groupe alkylène linéaire ou ramifié comportant de 4 à 20 atomes de carbone et R₉ et R₁₀ forment ensemble un groupement C=O.

8. Polymère selon la revendication 7 répondant à la formule (IX) suivante, 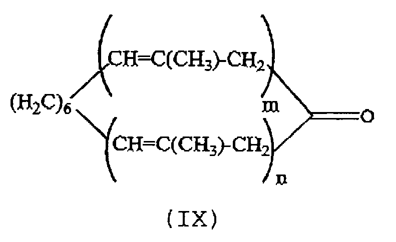 avec m et n étant tels que définis dans la revendication 6.

9. Polymère selon la revendication 6, dans lequel D représente un groupe alkylène linéaire ou ramifié comportant de 4 à 20 atomes de carbone et R₉ et R₁₀ représentent tous deux un groupe OH, auquel cas le polymère correspondant est un polymère linéaire répondant à la formule (X) suivante :

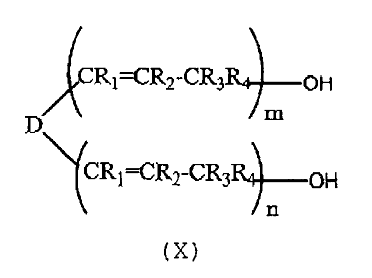

10. Polymère selon la revendication 9 répondant à la de formule (XI) 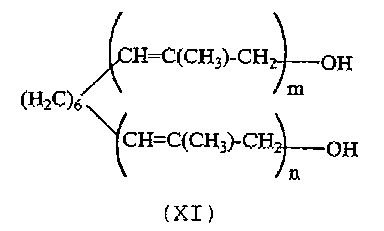 m et n étant tels que définis dans la revendication 6.

11. Polymère selon l'une quelconque des revendications précédentes, présentant une stéréochimie E des doubles liaisons.

12. Procédé de préparation d'un polymère, dont le squelette comprend un enchaînement de motifs de formule (I') :
-(CR₁=CR'₂-CR₃R₄)- (I')
dans laquelle :
- R₁ représente un atome d'hydrogène ou un groupe hydrocarboné choisi parmi les groupes alkyles linéaires ou ramifiés ayant de 1 à 20 atomes de carbone, les groupes cycloalkyles ayant de 3 à 8 atomes de carbone, les groupes alcoxy ayant de 1 à 20 atomes de carbone, les groupes aryles ayant de 6 à 20 atomes de carbone, les groupe aryloxy ayant de 6 à 20 atomes de carbone ;
- R'₂ représente un atome d'hydrogène, d'halogène ou un groupe hydrocarboné choisi parmi les groupes alkyles linéaires ou ramifiés ayant de 1 à 20 atomes de carbone, les groupes cycloalkyles ayant de 3 à 8 atomes de carbone, les groupes alcoxy ayant de 1 à 20 atomes de carbone, les groupes aryles ayant de 6 à 20 atomes de carbone, les groupe aryloxy ayant de 6 à 20 atomes de carbone ;
- les R₃ et R₄, identiques ou différents, répondent à la même définition que R₁, à condition que l'un au moins des R₃, R₄ représentent, dans chaque motif, un atome d'hydrogène ;
lesdits R₁, R₂, R₃ et R₄ pouvant comporter, lorsqu'ils représentent un groupe hydrocarboné, un ou plusieurs substituants choisis parmi les groupes halogène, les groupes alkyle de 1 à 20 atomes de carbone, les groupes alcoxy de 1 à 20 atomes de carbone, les groupes aryle de 6 à 20 atomes de carbone, les groupes aryloxy de 6 à 20 atomes de carbone, les groupes amino,
ledit procédé comprenant une étape consistant à faire réagir, en quantité appropriée :
- au moins un composé de type ylure répondant à la formule (2) ci-dessous : 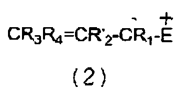 dans laquelle les R₁, R'₂, R₃ et R₄ répondent à la même définition que celle donnée ci-dessus, E étant un groupe partant,
- avec un composé boré trivalent, comportant au moins un groupe apte à migrer, de façon à obtenir ledit enchaînement de motifs de formule (I') tels que définis ci-dessus.

13. Procédé selon la revendication 12, dans lequel le groupe apte à migrer est un groupe choisi parmi les groupes alkyles linéaires ou ramifié comportant de 1 à 20 atomes de carbone, à l'exception des groupes alkyles ramifiés liés au bore par un carbone tertiaire.

14. Procédé selon la revendication 12 ou 13, dans lequel le groupe partant E est choisi parmi parmi N₂, S(R)₂, S(O)(R)₂, N(R)₃, AsAr₃, PAr₃, où Ar représente un groupe phényle éventuellement substitué par des groupements méthyle ou méthoxy et R est un groupe alkyle.

15. Procédé selon l'une quelconque des revendications 12 à 14, dans lequel le composé ylure est l'ylure de méthallyltriphénylarsonium.

16. Procédé de préparation d'un polymère répondant à la formule (II') suivante :
R₅-(CR₁=CR'₂-CR₃R₄)ₚ-R₆, (II')
avec :
- les R₁, R'₂, R₃, R₄ ayant la même définition que celle de la revendication 12 ; et
- R₅ représente un groupe alkyle linéaire ou ramifié comportant de 1 à 20 atomes de carbone, un groupe cycloalkyle comportant de 3 à 20 atomes de carbone ou un groupe aryle comportant de 6 à 20 atomes de carbone ;
- R₆ représente un groupe -OH, amine primaire, thiol - SH, halogène, -CHO, un groupe dérivé de -CHO, un groupe ester, un groupe amide éventuellement substitué, un groupe azide -N₃ ;
- p est un entier allant de 4 à 10 000 ;
ledit procédé comprenant une étape de réaction, en quantité appropriés :
- d'un composé boré de formule (1) R'₅-BR₁₁R₁₂ avec R₅ ayant la même définition que celle donnée ci-dessus et représentant le groupe apte à migrer, R₁₁ et R₁₂, identiques ou différents, peuvent :
- représenter un groupe alkyle ramifié lié au bore par un carbone tertiaire comportant de 4 à 20 atomes de carbone, un groupe alcoxy comportant de 1 à 20 atomes de carbone, un groupe aryloxy comportant de 1 à 20 atomes de carbone ; ou
- former ensemble un groupe -O-X-O-, dans lequel X est un groupe alkylène diyle linéaire ou ramifié comportant de 2 à 6 atomes de carbone,
- avec au moins un composé nucléophile allylique du type ylure de formule (2) tel que définie dans la revendication 12, moyennant quoi on obtient un intermédiaire de formule (XII) ci-dessous :
R₅-(CR₁=CR'₂-CR₃R₄)p-BR₁₁R₁₂ (XII)
ledit procédé comprenant, en outre, une étape de transformation du groupe boré en groupe R₆ approprié, moyennant quoi on obtient le polymère de formule (II') défini ci-dessus.

17. Procédé de préparation d'un polymère répondant à la formule (II') suivante :
R₅-(CR₁=CR'₂-CR₃R₄)ₚ-R₆, (II')
avec :
- les R₁, R'₂, R₃, R₄ ayant la même définition que celle de la revendication 12 ;
- R₅ représente un groupe alkyle linéaire ou ramifié comportant de 1 à 20 atomes de carbone, un groupe cycloalkyle comportant de 3 à 20 atomes de carbone ou un groupe aryle comportant de 6 à 20 atomes de carbone ;
- R₆ représente un groupe -OH, amine primaire, thiol - SH, halogène, -CHO, un groupe dérivé de -CHO, un groupe ester, un groupe amide éventuellement substitué, un groupe azide -N₃ ;
- p est un entier allant de 4 à 10 000
ledit procédé comprenant une étape de réaction, en quantité appropriée, d'un composé boré de formule (R₅) ₃-B avec R₅ ayant la même définition que celle donnée précédemment,
avec au moins un composé nucléophile allylique du type ylure de formule (2) tel que définie dans la revendication 12, moyennant quoi on obtient un intermédiaire de formule (XIII) ci-dessous :
[R₅-(CR₁=CR'₂-CR₃R₄)ₚ]₃-B (XIII)
ledit procédé comprenant, en outre, une étape de transformation du groupe boré en groupe R₆ approprié, moyennant quoi on obtient le polymère de formule (II') défini ci-dessus.

18. Procédé selon la revendication 17, dans lequel le composé bcré a pour formule Bu₃B, le composé nucléophile de type ylure est le méthallyltriphénylarsonium, moyennant quoi on obtient à l'issue d'une étape finale de transformation, par traitement à l'eau oxygènée en milieu basique, le polymère de la revendication 1.

19. Procédé de préparation du polymère répondant à la formule suivante : 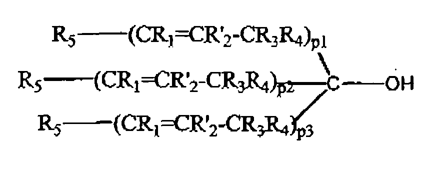 dans laquelle les R₅, étant identiques ou différents, représentent un groupe alkyle linéaire ou ramifié comportant de 1 à 20 atomes de carbone, un groupe cycloalkyle comportant de 3 à 20 atomes de carbone ou un groupe aryle comportant de 6 à 20 atomes de carbone et les p₁, p₂ et p₃, identiques ou différents, étant des entiers allant de 2 à 5000,
ledit procédé comprenant une étape de réaction, en quantité appropriée, d'un composé boré de formule (R₅)₃-B avec
avec au moins un composé nucléophile allylique du type ylure de formule (2) tel que définie dans la revendication 12, moyennant quoi on obtient un intermédiaire de formule (XIV) ci-dessous : 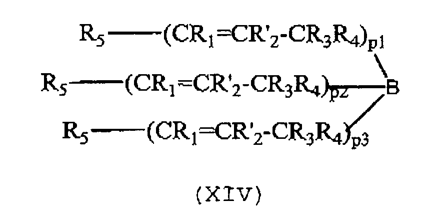 ledit procédé comprenant, en outre, une étape de transformation du groupe boré en groupe C-OH par traitement du composé intermédiaire (XIV) par chauffage en présence de monoxyde de carbone suivi d'un traitement à l'eau oxygénée en milieu basique.

20. Procédé de préparation d'un polymère de formule (IV') suivante :
R₇-(CR₁=CR'₂-CR₃R₄)ₘ-A-(CR₁=CR'₂-CR₃R₄)ₙ-R₈ (IV')
avec les R₁, R'₂, R₃, R₄ ayant la même définition que celle de la revendication 12, R₇, R₈, A, m et n ayant la même définition que celle de la revendication 3, ledit procédé comprenant la réaction d'un composé boré de formule (6) R₇-BR₈R₁₃ avec R₇ et R₈ ayant la même définition que celle donnée précédemment, R₁₃ étant un groupe alkyle ramifié lié au bore par un carbone tertiaire comportant de 4 à 20 atomes de carbone, un groupe alcoxy ou aryloxy comportant de 1 à 20 atomes de carbone avec au moins un composé nucléophile allylique du type ylure de formule (2) : 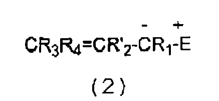 telle que définie dans la revendication 12, moyennant l'on obtient un dérivé de formule (XIII):
R₇-(CR₁-CR'₂-CR₃R₄)ₘ-BR₁₃-(CR₁=CR'₂-CR₃R₄)ₙ-R₈ (XIII)
suivi d'une réaction de transformation du groupe BR₁₃ en groupe A approprié.

21. Procédé de préparation d'un polymère de formule (VII') suivante : 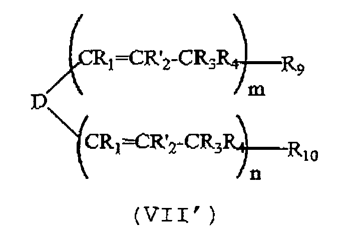 avec les R₁, R'₂, R₃, R₄ ayant la même définition que celle de la revendication 12, R₉, R₁₀, D, m et n ayant la même définition que celle de la revendication 6, ledit procédé comprenant une étape de réaction d'un composé boré cyclique de formule (7) : 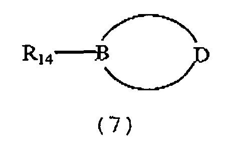 R₁₄ représentant un groupe choisi parmi les groupes alkyles ramifiés liés au bore par un carbone tertiaire comportant de 4 à 20 atomes de carbone, les groupes alcoxy ou aryloxy comportant de 1 à 20 atomes de carbone,
avec au moins un composé nucléophile de type ylure de formule (2) : 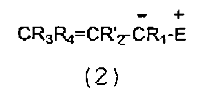 telle que définie dans la revendication 12, afin d'obtenir un dérivé de formule (XIV) : 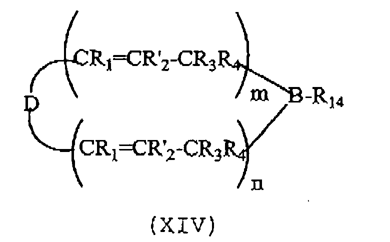 suivi d'une étape de transformation du groupe BR₁₄ en groupes R₉ et R₁₀ appropriés.

22. Procédé selon la revendication 21, dans lequel le composé cyclique boré est le B-thexylborépane, le composé nucléophile de type ylure est le méthallyltriphénylarsonium, moyennant quoi on obtient à l'issue d'une étape de transformation par action d'eau oxygénée en milieu basique le polymère de formule (XI) de la revendication 10.

23. Procédé selon la revendication 21, dans lequel le composé cyclique boré est le B-thexylborépane, le composé nucléophile de type ylure est le méthallyltriphénylarsonium, moyennant quoi on obtient à l'issue d'une étape de transformation dit de carbonylation le polymère de formule (IX) de la revendication 8.

## Claims

1. Polymer corresponding to formula (III) below:
CH₃-(CH₂)₃-(CH=CCH₃-CH₂)ₚ-OH (III)
p being an integer ranging from 4 to 10 000.

2. Polymer corresponding to the following formula: 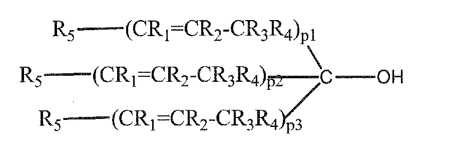 in which:
- the R₁ represent a hydrogen atom or a hydrocarbon-based group chosen from linear or branched alkyl groups containing from 1 to 20 carbon atoms, cycloalkyl groups containing from 3 to 8 carbon atoms, alkoxy groups containing from 1 to 20 carbon atoms, aryl groups containing from 6 to 20 carbon atoms and aryloxy groups containing from 6 to 20 carbon atoms;
- the R₂ represent a halogen atom or a hydrocarbon-based group chosen from linear or branched alkyl groups containing from 1 to 20 carbon atoms, cycloalkyl groups containing from 3 to 8 carbon atoms, alkoxy groups containing from 1 to 20 carbon atoms, aryl groups containing from 6 to 20 carbon atoms and aryloxy groups containing from 6 to 20 carbon atoms;
- the R₃ and R₄, which may be identical or different, correspond to the same definition as R₁, on condition that at least one of the radicals R₃ and R₄ represents, in each unit, a hydrogen atom;
the said radicals R₁, R₂, R₃ and R₄ possibly comprising, when they represent a hydrocarbon-based group, one or more substituents chosen from halogen groups, alkyl groups of 1 to 20 carbon atoms, alkoxy groups of 1 to 20 carbon atoms, aryl groups of 6 to 20 carbon atoms, aryloxy groups of 6 to 20 carbon atoms and amino groups;
- the R₅, which may be identical or different, represent a linear or branched alkyl group containing from 1 to 20 carbon atoms, a cycloalkyl group containing from 3 to 20 carbon atoms or an aryl group containing from 6 to 20 carbon atoms; and
- p₁, p₂ and p₃, which may be identical or different, are integers ranging from 2 to 5000.

3. Polymer corresponding to formula (IV) below:
R₇- (CR₁=CR₂-CR₃R₄)ₘ-A-(CR₃R₄-CR₂=CR₁)ₙ-R₈ (IV)
in which the R₁, R₂, R₃ and R₄ are as defined in claim 2, A represents a C=O group, a CO derivative or -CHOH group, and the R₇ and R₈, which may be identical or different, represent a linear or branched alkyl group containing from 1 to 20 carbon atoms, a cycloalkyl group containing from 3 to 20 carbon atoms or an aryl group containing from 6 to 20 carbon atoms, m is an integer ranging from 2 to 5000 and n is an integer ranging from 2 to 5000.

4. Polymer according to Claim 3, in which A is a C=O group.

5. Polymer according to Claim 4 corresponding to formula (VI) below:
Bu-(CH=C(CH₃-CH₂)ₘ-(C=O)-(CH₂-C(CH₃)=CH)ₙ-Bu (VI)
Bu representing the linear butyl group, m and n being as defined in claim 3.

6. Polymer corresponding to formula (VII): 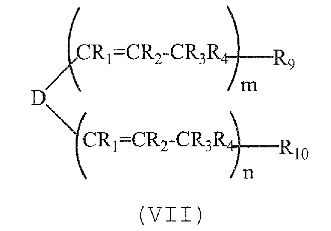 in which:
- the R₁, R₂, R₃ and R₄ correspond to the same definition as that given in Claim 2 and m and n to the same definition as that given in Claim 3, and;
- the R₉ and R₁₀, which may be identical or different, represent an OH, NH₂, SH, optionally substituted amide or -CHO group, a group derived from -CHO, an ester group, an optionally substituted amide group or an azide group -N₃; or
- R₉ and R₁₀ together form a -C(=O)- group, a group derived from CO or a -CHOH- group;
- D represents a linear or branched alkylenediyl group containing from 4 to 20 carbon atoms, possibly comprising in its chain one or more heteroatoms chosen from oxygen, sulfur and nitrogen, m is an integer ranging from 2 to 5000 and n is an integer ranging from 2 to 5000.

7. Polymer according to Claim 6, in which D represents a linear or branched alkylene group containing from 4 to 20 carbon atoms and R₉ and R₁₀ together form a C=O group.

8. Polymer according to Claim 7 corresponding to formula (IX) below, 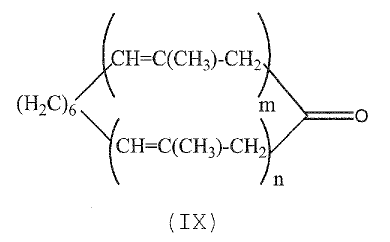 with m and n being as defined in Claim 6.

9. Polymer according to Claim 6, in which D represents a linear or branched alkylene group containing from 4 to 20 carbon atoms and R₉ and R₁₀ both represent an OH group, in which case the corresponding polymer is a linear polymer corresponding to formula (X) below:

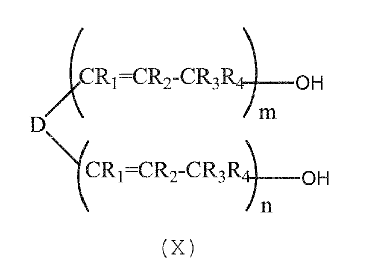

10. Polymer according to Claim 9 corresponding to formula (XI) 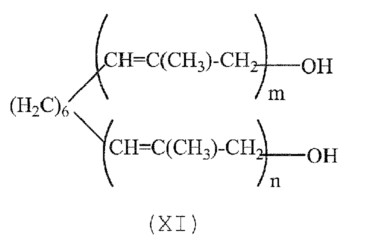 m and n being as defined in Claim 6.

11. Polymer according to any one of the preceding claims, having E stereochemistry of the double bonds.

12. Process for preparing a polymer whose skeleton comprises a sequence of units of formula (I'):
- (CR₁=CR'₂-CR₃R₄)- (I')
in which:
- R₁ represents a hydrogen atom or a hydrocarbon-based group chosen from linear or branched alkyl groups containing from 1 to 20 carbon atoms, cycloalkyl groups containing from 3 to 8 carbon atoms, alkoxy groups containing from 1 to 20 carbon atoms, aryl groups containing from 6 to 20 carbon atoms and aryloxy groups containing from 6 to 20 carbon atoms;
- R'₂ represents a hydrogen or halogen atom or a hydrocarbon-based group chosen from linear or branched alkyl groups containing from 1 to 20 carbon atoms, cycloalkyl groups containing from 3 to 8 carbon atoms, alkoxy groups containing from 1 to 20 carbon atoms, aryl groups containing from 6 to 20 carbon atoms and aryloxy groups containing from 6 to 20 carbon atoms;
- the R₃ and R₄, which may be identical or different, correspond to the same definition as R₁, on condition that at least one of the radicals R₃ and R₄ represents, in each unit, a hydrogen atom;
the said R₁, R₂, R₃ and R₄ possibly comprising, when they represent a hydrocarbon-based group, one or more substituents chosen from halogen groups, alkyl groups of 1 to 20 carbon atoms, alkoxy groups of 1 to 20 carbon atoms, aryl groups of 6 to 20 carbon atoms, aryloxy groups of 6 to 20 carbon atoms and amino groups,
the said process comprising a step consisting in reacting, in suitable amount:
- at least one compound of ylide type corresponding to formula (2) below: 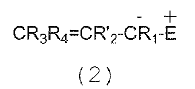 in which the R₁, R'₂, R₃ and R₄ correspond to the same definition as that given above, E being a leaving group,
- with a trivalent boron compound, comprising at least one group capable of migrating, so as to obtain the said sequence of units of formula (I') as defined above.

13. Process according to Claim 12, in which the group capable of migrating is a group chosen from linear or branched alkyl groups containing from 1 to 20 carbon atoms, with the exception of branched alkyl groups linked to boron via a tertiary carbon.

14. Process according to Claim 12 or 13, in which the leaving group E is chosen from N₂, S(R)₂, S(O)(R)₂, N(R)₃, AsAr₃ and PAr₃, in which Ar represents a phenyl group optionally substituted with methyl or methoxy groups and R is an alkyl group.

15. Process according to any one of Claims 12 to 14, in which the ylide compound is methallyltriphenylarsonium ylide.

16. Process for preparing a polymer corresponding to formula (II') below:
R₅-(CR₁=CR'₂-CR₃R₄)ₚ-R₆, (II')
in which:
- the R₁, R'₂, R₃ and R₄ having the same definition as that of Claim 12; and
- R₅ represents a linear or branched alkyl group containing from 1 to 20 carbon atoms, a cycloalkyl group containing from 3 to 20 carbon atoms or an aryl group containing from 6 to 20 carbon atoms;
- R₆ represents an - OH, primary amine, thiol -SH, halogen or -CHO group, a group derived from -CHO, an ester group, an optionally substituted amide group or an azide group -N₃;
- p is an integer ranging from 4 to 10 000;
the said process comprising a step of reacting, in suitable amount:
- a boron compound of formula (1) R₅-BR₁₁R₁₂ with R₅ having the same definition as that given above and representing the group capable of migrating, R₁₁ and R₁₂, which may be identical or different, possibly:
- representing a branched alkyl group linked to the boron via a tertiary carbon containing from 4 to 20 carbon atoms, an alkoxy group containing from 1 to 20 carbon atoms or an aryloxy group containing from 1 to 20 carbon atoms; or
- together forming a group -O-X-O-, in which X is a linear or branched alkylenediyl group containing from 2 to 6 carbon atoms,
- with at least one allylic nucleophilic compound of the ylide type of formula (2) as defined in Claim 12, by means of which an intermediate of formula (XII) below is obtained:
R₅-(CR₁=CR'₂-CR₃R₄)ₚ-BR₁₁R₁₂ (XII)
the said process also comprising a step of converting the boron-based group into a suitable group R₆, by means of which the polymer of formula (II') defined above is obtained.

17. Process for preparing a polymer corresponding to formula (II') below:
R₅-(CR₁=CR'₂-CR₃R₄)ₚ-R₆, (II')
in which:
- the R₁, R'₂, R₃ and R₄ having the same definition as that of Claim 12;
- R₅ represents a linear or branched alkyl group containing from 1 to 20 carbon atoms, a cycloalkyl group containing from 3 to 20 carbon atoms or an aryl group containing from 6 to 20 carbon atoms;
- R₆ represents an - OH, primary amine, thiol -SH, halogen or -CHO group, a group derived from -CHO, an ester group, an optionally substituted amide group or an azide group -N₃;
- p is an integer ranging from 4 to 10 000;
the said process comprising a step of reacting, in suitable amount, a boron compound of formula (R₅)₃-B with R₅ having the same definition as that given above,
with at least one allylic nucleophilic compound of the ylide type of formula (2) as defined in Claim 12, by means of which an intermediate of formula (XIII) below is obtained:
[R₅-(CR₁=CR'₂-CR₃R₄)ₚ]₃-B (XIII)
the said process also comprising a step of converting the boron-based group into a suitable group R₆, by means of which the polymer of formula (II') defined above is obtained.

18. Process according to Claim 17, in which the boron compound has the formula Bu₃B and the nucleophilic compound of ylide type is methallyltriphenylarsonium, by means of which the polymer of Claim 1 is obtained after a final step of conversion by treatment with aqueous hydrogen peroxide solution in basic medium.

19. Process for preparing the polymer corresponding to the following formula: 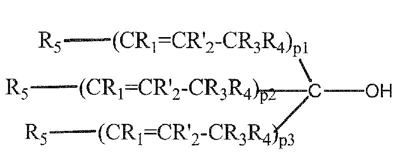 in which the R₅, which may be identical or different, represent a linear or branched alkyl group containing from 1 to 20 carbon atoms, a cycloalkyl group containing from 3 to 20 carbon atoms or an aryl group containing from 6 to 20 carbon atoms and p₁, p₂ and p₃, which may be identical or different, being integers ranging from 2 to 5000,
the said process comprising a step of reacting, in suitable amount, a boron compound of formula (R₅)₃-B with at least one allylic nucleophilic compound of the ylide type of formula (2) as defined in Claim 12, by means of which an intermediate of formula (XIV) below is obtained: 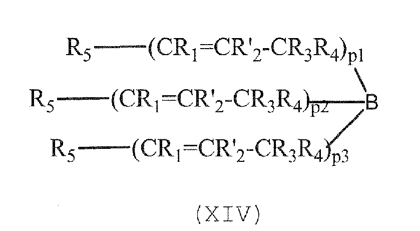 the said process also comprising a step of converting the boron-based group into a C-OH group by treatment of the intermediate compound (XIV) by heating in the presence of carbon monoxide, followed by a treatment with aqueous hydrogen peroxide solution in basic medium.

20. Process for preparing a polymer of formula (IV') below:
R₇-(CR₁=CR'₂-CR₃R₄)ₘ-A-(CR₁=CR'₂CR₃R₄)ₙ-R₈ (IV')
with R₁, R'₂, R₃ and R₄ having the same definition as that of Claim 12, R₇, R₈, A, m and n having the same definition as that of Claim 3, the said process comprising the reaction of a boron compound of formula (6) R₇-BR₈R₁₃ with R₇ and R₈ having the same definition as that given above, R₁₃ being a branched alkyl group linked to the boron via a tertiary carbon containing from 4 to 20 carbon atoms, or an alkoxy or aryloxy group containing from 1 to 20 carbon atoms, with at least one allylic nucleophilic compound of the ylide type of formula (2): 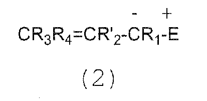 as defined in Claim 12, by means of which a derivative of formula (XIII) is obtained:
R₇-(CR₁=CR'₂-CR₃R₄)ₘ-BR₁₃-(CR₁=CR'₂-CR₃R₄)ₙ-R₈ (XIII)
followed by a reaction for conversion of the group BR₁₃ into a suitable group A.

21. Process for preparing a polymer of formula (VII') below: 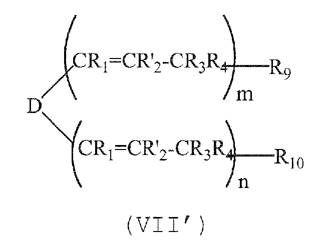 with the radicals R₁, R'₂, R₃ and R₄ having the same definition as that of Claim 12, R₉, R₁₀, D, m and n having the same definition as that of Claim 6, the said process comprising a step of reacting a cyclic boron compound of formula (7): 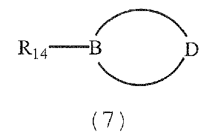 R₁₄ representing a group chosen from branched alkyl groups linked to boron via a tertiary carbon containing from 4 to 20 carbon atoms, or alkoxy or aryloxy groups containing from 1 to 20 carbon atoms,
with at least one nucleophilic compound of ylide type of formula (2): 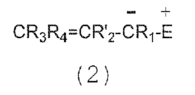 as defined in Claim 12, in order to obtain a derivative of formula (XIV): 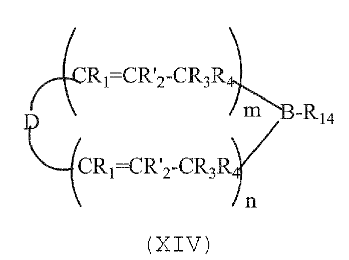 followed by a step of conversion of the group BR₁₄ into suitable groups R₉ and R₁₀.

22. Process according to Claim 21, in which the cyclic boron compound is B-thexylborepane and the nucleophilic compound of ylide type is methallyltriphenylarsonium, by means of which the polymer of formula (XI) of Claim 10 is obtained after a step of conversion via the action of aqueous hydrogen peroxide solution in basic medium.

23. Process according to Claim 21, in which the cyclic boron compound is B-thexylborepane and the nucleophilic compound of ylide type is methallyltriphenylarsonium, by means of which the polymer of formula (IX) of Claim 8 is obtained after a carbonylation step of conversion.

## Patentansprüche

1. Polymer entsprechend der folgenden Formel (III):
CH₃-(CH₂)₃-(CH=CCH₃-CH₂)ₚ-OH (III)
worin p eine ganze Zahl von 4 bis 10 000 ist.

2. Polymer entsprechend der folgenden Formel: 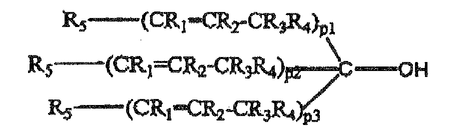 worin:
- R₁ ein Wasserstoffatom oder eine Kohlenwasserstoffgruppe darstellt, die aus geraden oder verzweigten Alkylgruppen mit 1 bis 20 Kohlenstoffatomen, Cycloalkylgruppen mit 3 bis 8 Kohlenstoffatomen, Alkoxygruppen mit 1 bis 20 Kohlenstoffatomen, Arylgruppen mit 6 bis 20 Kohlenstoffatomen und Aryloxygruppen mit 6 bis 20 Kohlenstoffatomen ausgewählt ist,
- R₂ ein Halogenatom oder eine Kohlenwasserstoffgruppe darstellt, die aus geraden oder verzweigten Alkylgruppen mit 1 bis 20 Kohlenstoffatomen, Cycloalkylgruppen mit 3 bis 8 Kohlenstoffatomen, Alkoxygruppen mit 1 bis 20 Kohlenstoffatomen, Arylgruppen mit 6 bis 20 Kohlenstoffatomen und Aryloxygruppen mit 6 bis 20 Kohlenstoffatomen ausgewählt ist,
- R₃ und R₄, die gleich oder verschieden sind, derselben Definition wir R₁ mit der Maßgabe entsprechen, dass wenigstens eines von R₃ und R₄ bei jeder Struktureinheit ein Wasserstoffatom darstellt,
wobei R₁, R₂, R₃ und R₄, wenn sie eine Kohlenwasserstoffgruppe darstellen, einen oder mehr Substituenten umfassen können, die aus Halogengruppen, Alkylgruppen mit 1 bis 20 Kohlenstoffatomen, Alkoxygruppen mit 1 bis 20 Kohlenstoffatomen, Arylgruppen mit 6 bis 20 Kohlenstoffatomen, Aryloxygruppen mit 6 bis 20 Kohlenstoffatomen und Aminogruppen ausgewählt sind,
- R₅, das gleich oder verschieden ist, eine 1 bis 20 Kohlenstoffatome umfassende, gerade oder verzweigte Alkylgruppe, eine 3 bis 20 Kohlenstoffatome umfassende Cycloalkylgruppe oder eine 6 bis 20 Kohlenstoffatome umfassende Arylgruppe darstellt, und
- p₁, p₂ und p₃, die gleich oder verschieden sind, ganze Zahlen von 2 bis 5000 sind.

3. Polymer entsprechend der folgenden Formel (IV):
R₇-(CR₁=CR₂-CR₃R₄)ₘ-A-(CR₃R₄-CR₂=CR₁)ₙ-R₈ (IV)
worin R₁, R₂, R₃ und R₄ wie in Anspruch 2 definiert sind, A eine Gruppe C=O, eine von CO abgeleitete Gruppe oder eine Gruppe CHOH darstellt, R₇ und R₈, die gleich oder verschieden sind, eine 1 bis 20 Kohlenstoffatomen umfassende, gerade oder verzweigte Alkylgruppe, eine Cycloalkylgruppe mit 3 bis 20 Kohlenstoffatomen oder eine Arylgruppe mit 6 bis 20 Kohlenstoffatomen darstellen, m eine ganze Zahl von 2 bis 5000 ist und n eine ganze Zahl von 2 bis 5000 ist.

4. Polymer gemäß Anspruch 3, bei dem A eine Gruppe C=O ist.

5. Polymer gemäß Anspruch 4, das der folgenden Formel (IV) entspricht:
Bu-(CH=C(CH₃)-CH₂)ₘ-(C=O)-(CH₂-C(CH₃)=CH)ₙ-Bu (VI)
worin Bu eine gerade Butylgruppe darstellt und m und n wie in Anspruch 3 definiert sind.

6. Polymer entsprechend der Formel (VII): 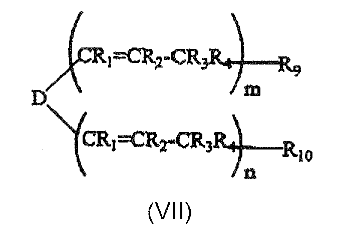 worin:
- R₁, R₂, R₃ und R₄ wie in Anspruch 2 definiert sind und m und n wie in Anspruch 3 definiert sind, und
- Rg und R₁₀, die gleich oder verschieden sind, eine OH-, NH₂-, gegebenenfalls substituierte Amidgruppe, eine Gruppe -CHO, eine von -CHO abgeleitete Gruppe, eine gegebenenfalls substituiert Amidgruppe oder eine Azidgruppe -N₃ sind, oder R₉ und R₁₀ zusammen eine Gruppe -C(=O)-, eine von CO abgeleitete Gruppe oder -CHOH- bilden,
- D eine 4 bis 20 Kohlenstoffatome umfassende, gerade oder verzweigte Alkylendiylgruppe darstellt, die in ihrer Kette ein oder mehr aus Sauerstoff, Schwefel und Stickstoff ausgewählte Heteroatome umfassen kann, m eine ganze Zahl von 2 bis 5000 ist und n eine ganze Zahl von 2 bis 5000 ist.

7. Polymer gemäß Anspruch 6, bei dem D eine 4 bis 20 Kohlenstoffatome umfassende, gerade oder verzweigte Alkylgruppe darstellt und R₉ und R₁₀ zusammen eine Gruppe C=O bilden.

8. Polymer gemäß Anspruch 7, das der folgenden Formel (IX) entspricht, 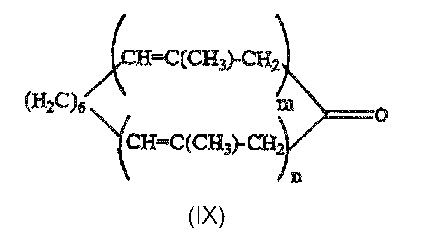 worin m und n wie in Anspruch 6 definiert sind.

9. Polymer gemäß Anspruch 6, bei dem D eine 4 bis 20 Kohlenstoffatome umfassende, gerade oder verzweigte Alkylgruppe darstellt und R₉ und R₁₀ beide zusammen eine OH-Gruppe darstellen, in welchem Fall das entsprechende Polymer ein gerades, der folgenden Formel (X) entsprechendes Polymer ist:

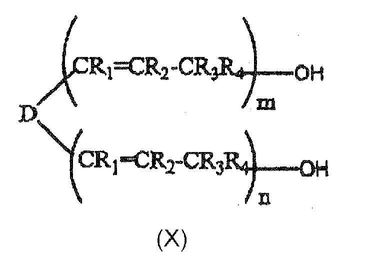

10. Polymer gemäß Anspruch 9, das der Formel (XI) entspricht, 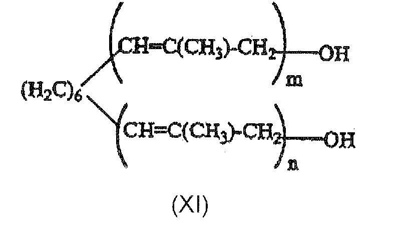 worin m und n wie in Anspruch 6 definiert sind.

11. Polymer gemäß einem der vorangehenden Ansprüche, das eine E-Stereochemie der Doppelbindungen aufweist.

12. Verfahren zur Herstellung eines Polymers, dessen Rückgrat eine Kette aus Struktureinheiten der Formel (I') umfasst:
-(CR₁=CR'₂-CR₃R₄)- (I')
worin:
- R₁ ein Wasserstoffatom oder eine Kohlenwasserstoffgruppe darstellt, die aus geraden oder verzweigten Alkylgruppen mit 1 bis 20 Kohlenstoffatomen, Cycloalkylgruppen mit 3 bis 8 Kohlenstoffatomen, Alkoxygruppen mit 1 bis 20 Kohlenstoffatomen, Arylgruppen mit 6 bis 20 Kohlenstoffatomen und Aryloxygruppen mit 6 bis 20 Kohlenstoffatomen ausgewählt ist,
- R'₂ ein Wasserstoff- oder Halogenatom oder eine Kohlenwasserstoffgruppe darstellt, die aus geraden oder verzweigten Alkylgruppen mit 1 bis 20 Kohlenstoffatomen, Cycloalkylgruppen mit 3 bis 8 Kohlenstoffatomen, Alkoxygruppen mit 1 bis 20 Kohlenstoffatomen, Arylgruppen mit 6 bis 20 Kohlenstoffatomen und Aryloxygruppen mit 6 bis 20 Kohlenstoffatomen ausgewählt ist,
- R₃ und R₄, die gleich oder verschieden sind, derselben Definition wir R₁ mit der Maßgabe entsprechen, dass wenigstens eines von R₃ und R₄ bei jeder Struktureinheit ein Wasserstoffatom darstellt,
wobei R₁, R₂, R₃ und R₄, wenn sie eine Kohlenwasserstoffgruppe darstellen, einen oder mehr Substituenten umfassen können, die aus Halogengruppen, Alkylgruppen mit 1 bis 20 Kohlenstoffatomen, Alkoxygruppen mit 1 bis 20 Kohlenstoffatomen, Arylgruppen mit 6 bis 20 Kohlenstoffatomen, Aryloxygruppen mit 6 bis 20 Kohlenstoffatomen und Aminogruppen ausgewählt sind, und
das Verfahren einen Schritt umfasst, der aus dem Umsetzen in geeigneter Menge:
- wenigstens einer Verbindung des Ylidtyps, die der nachstehenden Formel (2) entspricht: 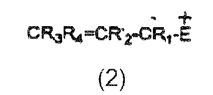 worin R₁, R'₂, R₃ und R₄ derselben Definition wie der vorstehend angegebenen entsprechen und E eine Abgangsgruppe ist,
- mit einer dreiwertigen Borverbindung besteht, die wenigstens eine Gruppe umfasst, die dazu befähigt ist, so zu wandern, dass die Kette aus den vorstehend definierten Struktureinheiten der Formel (I') erhalten wird.

13. Verfahren gemäß Anspruch 12, bei dem die zur Wanderung befähigte Gruppe eine aus 1 bis 20 Kohlenstoffatome umfassenden, geraden oder verzweigten Alkylgruppen mit Ausnahme durch einen tertiären Kohlenstoff an das Bor gebundener verzweigter Alkylgruppen ausgewählte Gruppe ist.

14. Verfahren gemäß Anspruch 12 oder 13, bei dem die Abgangsgruppe E aus N₂, S(R)₂, S(O)(R)₂, N(R)₃, AsAr₃ und PAr₃, worin Ar eine gegebenenfalls durch Methyl- oder Methoxygruppen substituierte Phenylgruppe darstellt und R eine Alkylgruppe ist, ausgewählt ist.

15. Verfahren gemäß einem der Ansprüche 12 bis 14, bei dem die Ylidverbindung Methallyltriphenylarsoniumylid ist.

16. Verfahren zur Herstellung eines Polymers, das der folgenden Formel (II') entspricht:
R₅-(CR₁=CR'₂-CR₃R₄)ₚ-R₆ (II')
worin
- R₁, R'₂, R₃ und R₄ dieselbe Definition wie die des Anspruchs 12 aufweisen und
- R₅ eine 1 bis 20 Kohlenstoffatome umfassende, gerade oder verzweigte Alkylgruppe, eine 3 bis 20 Kohlenstoffatome umfassende Cycloalkylgruppe oder eine 6 bis 20 Kohlenstoffatome umfassende Arylgruppe darstellt,
- R₆ eine Gruppe -OH, ein primäres Amin, Thiol -SH, Halogen, -CHO, eine von
- CHO abgeleitete Gruppe, eine Estergruppe, eine gegebenenfalls substituiert Amidgruppe oder eine Azidgruppe -N₃ darstellt, und
- p eine ganze Zahl von 4 bis 10 000 ist,
wobei das Verfahren einen Schritt der Reaktion in geeigneter Menge:
- einer Borverbindung der Formel (1) R₅-BR₁₁R₁₂, worin R₅ dieselbe Definition wie die vorstehend angegebene aufweist und die zur Wanderung befähigte Gruppe darstellt und R₁₁ und R₁₂, die gleich oder verschieden sind,
- eine 4 bis 20 Kohlenstoffatome umfassende verzweigte Alkylgruppe, die durch einen tertiären Kohlenstoff an das Bor gebunden ist, eine 1 bis 20 Kohlenstoffatome umfassende Alkoxygruppe oder eine 1 bis 20 Kohlenstoffatome umfassende Aryloxygruppe darstellen können, oder
- zusammen eine Gruppe -O-X-O- bilden können, worin X eine 2 bis 6 Kohlenstoffatome umfassende, gerade oder verzweigte Alkylendiylgruppe ist,
- mit wenigstens einer nukleophilen Allylverbindung des Ylidtyps der Formel (2) wie in Anspruch 12 definiert umfasst, wodurch ein Zwischenprodukt der nachstehenden Formel (XII) erhalten wird:
R₅-(CR₁=CR'₂-CR₃R₄)ₚ-BR₁₁R₁₂ (XII)
wobei das Verfahren außerdem einen Schritt der Umwandlung der Borgruppe in eine geeignete Gruppe R₆ umfasst, wodurch das vorstehend definierte Polymer der Formel (II') erhalten wird.

17. Verfahren zur Herstellung eines Polymers, das der folgenden Formel (II') entspricht:
R₅-(CR₁=CR'₂-CR₃R₄)ₚ-R₆ (II')
worin
- R₁, R'₂, R₃ und R₄ dieselbe Definition wie die des Anspruchs 12 aufweisen,
- R₅ eine 1 bis 20 Kohlenstoffatome umfassende, gerade oder verzweigte Alkylgruppe, eine 3 bis 20 Kohlenstoffatome umfassende Cycloalkylgruppe oder eine 6 bis 20 Kohlenstoffatome umfassende Arylgruppe darstellt,
- R₆ eine Gruppe -OH, ein primäres Amin, Thiol -SH, Halogen, -CHO, eine von
- CHO abgeleitete Gruppe, eine Estergruppe, eine gegebenenfalls substituiert Amidgruppe oder eine Azidgruppe -N₃ darstellt, und
- p eine ganze Zahl von 4 bis 10 000 ist,
wobei das Verfahren einen Schritt der Reaktion in geeigneter Menge einer Borverbindung der Formel (R₅)₃-B, worin R₅ dieselbe Definition wie die vorstehend angegebene aufweist, mit wenigstens einer wie in Anspruch 12 definierten nukleophilen Allylverbindung des Ylidtyps der Formel (2) umfasst, wodurch ein Zwischenprodukt der nachstehenden Formel (XIII) erhalten wird:
[R₅-(CR₁=CR'₂-CR₃R₄)ₚ]₃-B (XIII)
wobei das Verfahren außerdem einen Schritt der Umwandlung der Borgruppe in eine geeignete Gruppe R₆ umfasst, wodurch das vorstehend definierte Polymer der Formel (II') erhalten wird.

18. Verfahren gemäß Anspruch 17, wobei die Borverbindung die Formel Bu₃B aufweist und die nukleophile Verbindung des Ylidtyps Methallyltriphenylarsonium ist, wodurch am Ende eines letzten Umwandlungsschritts durch Behandlung mit Wasserstoffperoxid in basischem Medium das Polymer des Anspruchs 1 erhalten wird.

19. Verfahren zur Herstellung des Polymers, das der folgenden Formel entspricht: 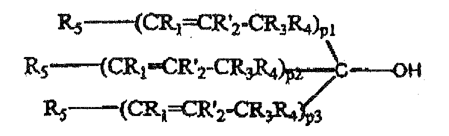 worin R₅, das gleich oder verschieden ist, eine 1 bis 20 Kohlenstoffatome umfassende, gerade oder verzweigte Alkylgruppe, eine 3 bis 20 Kohlenstoffatome umfassende Cycloalkylgruppe oder eine 6 bis 20 Kohlenstoffatome umfassende Arylgruppe ist und p₁, p₂ und p₃, die gleich oder verschieden sind, ganze Zahlen von 2 bis 5000 sind,
wobei das Verfahren einen Schritt der Reaktion in geeigneter Menge einer Borverbindung der Formel (R₅)₃-B mit
wenigstens einer wie in Anspruch 12 definierten nukleophilen Allylverbindung des Ylidtyps der Formel (2) umfasst, wodurch ein Zwischenprodukt der nachstehenden Formel (XIV) erhalten wird: 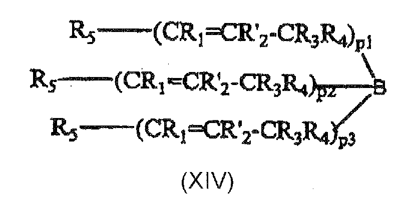 wobei das Verfahren außerdem einen Schritt der Umwandlung der Borgruppe in eine Gruppe C-OH durch Behandlung der Zwischenproduktverbindung (XIV) durch Erhitzen in Gegenwart von Kohlenmonoxid, gefolgt von einer Behandlung mit Wasserstoffperoxid in basischem Medium umfasst.

20. Verfahren zur Herstellung eines Polymers der folgenden Formel (IV'):
R₇-(CR₁=CR'₂-CR₃R₄)ₘ-A-(CR₁=CR'₂-CR₃R₄)ₙ-R₈ (IV')
worin R₁, R'₂, R₃ und R₄ dieselbe Definition wie die des Anspruchs 12 aufweisen, R₇, R₈, A, m und n dieselbe Definition wie die des Anspruchs 3 aufweisen und das Verfahren die Reaktion einer Borverbindung der Formel (6) R₇-BR₈R₁₃, worin R₇ und R₈ dieselbe Definition wie die vorstehend angegebene aufweisen und R₁₃ eine 4 bis 20 Kohlenstoffatome umfassende verzweigte Alkylgruppe, die durch einen tertiären Kohlenstoff an das Bor gebunden ist, oder eine 1 bis 20 Kohlenstoffatome umfassende Alkoxy- oder Aryloxygruppe ist, mit wenigstens einer wie in Anspruch 12 definierten nukleophilen Allylverbindung des Ylidtyps der Formel (2) umfasst: 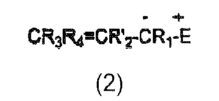 wodurch ein Derivat der Formel (XIII) erhalten wird:
R₇-(CR₁=CR'₂-CR₃R₄)ₘ-BR₁₃-(CR₁=CR'₂-CR₃R₄)ₙ-R₈ (XIII)
gefolgt von einer Reaktion der Umwandlung der Gruppe BR₁₃ in eine geeignete Gruppe A.

21. Verfahren zur Herstellung eines Polymers der folgenden Formel (VII'): 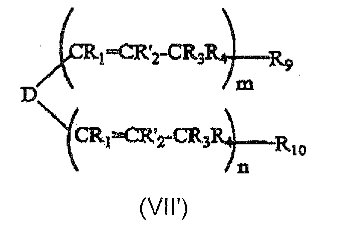 worin R₁, R'₂, R₃ und R₄ dieselbe Definition wie die des Anspruchs 12 aufweisen, R₉, R₁₀, D, m und n dieselbe Definition wie die des Anspruchs 6 aufweisen und das Verfahren einen Schritt der Reaktion einer cyclischen Borverbindung der Formel (7) 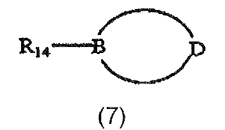 worin R₁₄ eine Gruppe darstellt, die aus 4 bis 20 Kohlenstoffatome umfassenden verzweigten Alkylgruppen, die durch einen tertiären Kohlenstoff an das Bor gebunden sind, und 1 bis 20 Kohlenstoffatome umfassenden Alkoxy- oder Aryloxygruppen ausgewählt sind,
mit wenigstens einer wie in Anspruch 12 definierten nukleophilen Verbindung des Ylidtyps der Formel (2) umfasst: 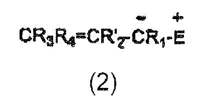 um ein Derivat der Formel (XIV) zu erhalten: 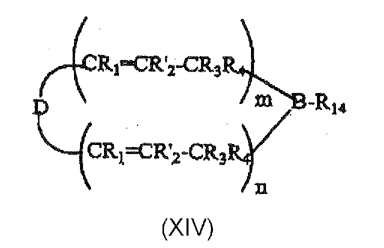 gefolgt von einem Schritt der Umwandlung der Gruppe BR₁₄ in geeignete Gruppen R₉ und R₁₀.

22. Verfahren gemäß Anspruch 21, wobei die cyclische Borverbindung B-Thexylborepan ist und die nukleophile Verbindung des Ylidtyps Methallyltriphenylarsonium ist, wodurch am Ende eines Schritts der Umwandlung durch Einwirkung von Wasserstoffperoxid in basischem Medium das Polymer der Formel (XI) des Anspruchs 10 erhalten wird.

23. Verfahren gemäß Anspruch 21, wobei die cyclische Borverbindung B-Thexylborepan ist und die nukleophile Verbindung des Ylidtyps Methallyltriphenylarsonium ist, wodurch am Ende eines Schritts der Umwandlung durch Carbonylierung das Polymer der Formel (IX) des Anspruchs 8 erhalten wird.
